(19) Europäisches Patentamt
European Patent Office
Office européen des brevets

(11) EP 4 446 113 A1

(12) **EUROPEAN PATENT APPLICATION**
published in accordance with Art. 153(4) EPC

(43) Date of publication:
**16.10.2024 Bulletin 2024/42**

(21) Application number: **22904198.3**

(22) Date of filing: **05.12.2022**

(51) International Patent Classification (IPC):
***B32B 27/32*** *(2006.01)* ***B32B 9/00*** *(2006.01)*
***B65D 65/40*** *(2006.01)*

(52) Cooperative Patent Classification (CPC):
**B32B 9/00; B32B 27/32; B65D 65/40;** Y02W 90/10

(86) International application number:
**PCT/JP2022/044793**

(87) International publication number:
**WO 2023/106270 (15.06.2023 Gazette 2023/24)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **10.12.2021 JP 2021200962**
**10.12.2021 JP 2021200964**
**17.02.2022 JP 2022022657**

(71) Applicant: **Toppan Holdings Inc.**
**Tokyo 110-0016 (JP)**

(72) Inventor: **NISHIKAWA Takeshi**
**Tokyo 110-0016 (JP)**

(74) Representative: **Hoffmann Eitle**
**Patent- und Rechtsanwälte PartmbB**
**Arabellastraße 30**
**81925 München (DE)**

# (54) BARRIER FILM, PACKAGING MATERIAL, PACKAGING CONTAINER, AND PACKAGED PRODUCT

(57) A barrier film includes a substrate layer, and a metal oxide layer. The substrate layer includes a biomass-derived polyolefin layer containing a biomass-derived polyolefin and a fossil fuel-derived polyolefin layer containing no biomass-derived polyolefin, the fossil fuel-derived polyolefin layer is an outermost layer of the substrate layer facing the metal oxide layer, and the substrate layer has a biomass content of greater than or equal to 5%.

FIG.1

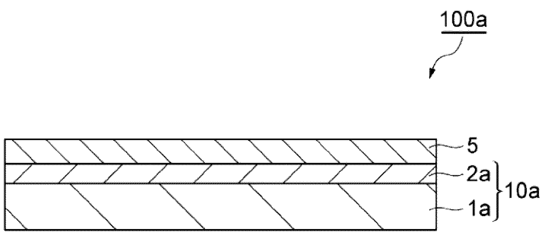




Processed by Luminess, 75001 PARIS (FR)

## Description

[Technical Field]

The present disclosure relates to a barrier film, a packaging material (packaging film), a packaging container, and a packaging product containing a biomass-derived polyolefin.

[Background Art]

Packaging containers such as packaging bags used to package food products, pharmaceutical products, and the like are required to exhibit gas barrier performance for blocking the entry of water vapor, oxygen, and other gases that degrade the contents, in order to prevent degradation, spoilage, or the like of the contents and maintain the function and properties of the contents. Thus, a barrier film has conventionally been used in such packaging containers. In general, a barrier film includes a substrate layer, an inorganic material layer, and a gas barrier coating layer, and in some cases, the substrate layer is composed of a polypropylene film. For example, Patent Literature 1 discloses a transparent laminate in which a thin film layer composed of an inorganic compound and a gas barrier coating are laminated in this order on a substrate composed of a transparent polypropylene film or the like.

In recent years, from the viewpoint of global environmental protection, packaging materials having high recyclability have been developed. Patent Literature 2 discloses a packaging material laminate including a substrate and a heat seal layer that are composed of the same polyolefin from the viewpoint of recyclability.

In the field of packaging materials, a gas barrier function is often required in order to prevent deterioration in quality of the contents. In such a case, a barrier layer such as a metal oxide layer may be provided on a substrate.

In the field of packaging materials, a printing layer is usually provided on a substrate to print characters or designs on a packaging bag.

[Citation List]

[Patent Literature]

[PTL 1] JP H10-264292 A
[PTL 2] JP 2020-40259 A

[Summary of the Invention]

[Technical Problem]

(First object)

In the field of packaging material laminates containing a polyolefin as a constituent material, the use of a biomass-derived raw material as part of the raw material contributes to global environmental protection.

Thus, the present inventor has attempted to produce a barrier film including a substrate layer containing a biomass-derived polyolefin, and a metal oxide layer provided on the substrate layer. However, the present inventor has found that the substrate layer containing a biomass-derived polyolefin has lower adhesion to the metal oxide layer as compared with a conventional substrate layer composed of only a fossil fuel-derived polyolefin.

A first object of the present disclosure is to provide a barrier film that contributes to global environmental protection and that has higher adhesion between a substrate layer containing a biomass-derived polyolefin and a metal oxide layer, and a packaging material including the barrier film.

(Second object)

In the field of packaging material laminates containing a polyolefin as a constituent material, the use of a biomass-derived raw material as part of the raw material contributes to global environmental protection.

Thus, the present inventor has attempted to produce a laminate including a substrate layer containing a biomass-derived polyolefin, and a printing layer provided on the substrate layer. However, the present inventor has found that the substrate layer containing a biomass-derived polyolefin has lower adhesion to the printing layer as compared with a conventional substrate layer composed of only a fossil fuel-derived polyolefin.

A second object of the present disclosure is to provide a packaging material that contributes to global environmental protection and that has higher adhesion between a substrate layer containing a biomass-derived polyolefin and a printing layer.

(Third object)

In recent years, plastic polymers containing a biomass-derived raw material have received attention as plastic polymers having a low environmental load, and the use of biomass-derived polypropylene (bio-polypropylene) is also being considered.

However, in the transparent laminate described in Patent Literature 1, when bio-polypropylene is used as polypropylene for the substrate layer, the transparent laminate has a lower environmental load, but has room for improvement in preventing deterioration in barrier performance.

The present disclosure has been made in view of the above problem, and a third object of the present disclosure is to provide a barrier film, a packaging material, a packaging container, and a packaging product capable of preventing deterioration in barrier performance while having a lower environmental load.

[Solution to Problem]

(First aspect)

In order to achieve the first object, the present disclosure provides the following barrier film and packaging material. A barrier film according to an aspect of the present disclosure is a barrier film including a substrate layer, and a metal oxide layer, wherein the substrate layer includes a biomass-derived polyolefin layer containing a biomass-derived polyolefin and a fossil fuel-derived polyolefin layer containing no biomass-derived polyolefin, the fossil fuel-derived polyolefin layer is an outermost layer of the substrate layer facing the metal oxide layer, and the substrate layer has a biomass content of greater than or equal to 5%.

The barrier film includes the substrate layer that contains a biomass-derived polyolefin and has a biomass content of greater than or equal to 5%, and thus can contribute to global environmental protection. Furthermore, in the barrier film, the fossil fuel-derived polyolefin layer containing no biomass-derived polyolefin is disposed as an outermost layer of the substrate layer facing the metal oxide layer, thus achieving higher adhesion between the substrate layer and the metal oxide layer as compared with the case where the biomass-derived polyolefin layer is the outermost layer of the substrate layer facing the metal oxide layer. The adhesion between the fossil fuel-derived polyolefin layer and the metal oxide layer is higher than the adhesion between the biomass-derived polyolefin layer and the metal oxide layer, and the adhesion between the fossil fuel-derived polyolefin layer and the biomass-derived polyolefin layer is also high, thus allowing the barrier film to have high lamination strength.

The fossil fuel-derived polyolefin layer may contain fossil fuel-derived polypropylene and fossil fuel-derived polyethylene. The barrier film including such a fossil fuel-derived polyolefin layer can have high levels of both heat resistance and lamination strength.

The barrier film may further include an adhesion layer that is disposed between the fossil fuel-derived polyolefin layer and the metal oxide layer. The barrier film including the adhesion layer can have even higher adhesion between the substrate layer and the metal oxide layer, and allows easy formation of the metal oxide layer with no defects.

A surface of the substrate layer facing the metal oxide layer may be surface treated. The use of the substrate layer whose surface facing the metal oxide layer is surface treated can achieve even higher adhesion between the substrate layer and the metal oxide layer, preventing delamination between these layers.

The barrier film may further include a protective layer that is disposed on a surface of the metal oxide layer facing away from the substrate layer. In the barrier film including the protective layer, the metal oxide layer can have higher wear resistance, allowing the barrier film to exhibit higher barrier performance.

The present disclosure also provides a packaging material including the barrier film, and a sealant layer, wherein the sealant layer is at least one outermost surface layer of the packaging material.

The packaging material may further include a polyolefin layer that is disposed on a surface of the barrier film facing away from the sealant layer. The packaging material further including the polyolefin layer has a larger thickness and has higher stiffness, and thus has better handleability and leads to less occurrence of sealing failure during bag formation.

(Second aspect)

In order to achieve the second object, the present disclosure provides the following packaging material. A packaging material according to an aspect of the present disclosure is a packaging material including a substrate layer,

a printing layer, and a sealant layer, wherein the substrate layer includes a biomass-derived polyolefin layer containing a biomass-derived polyolefin, and a fossil fuel-derived polyolefin layer containing no biomass-derived polyolefin, the fossil fuel-derived polyolefin layer is an outermost layer of the substrate layer facing the printing layer, the sealant layer is at least one outermost surface layer of the packaging material, and the substrate layer has a biomass content of greater than or equal to 5%.

The packaging material includes the substrate layer that contains a biomass-derived polyolefin and has a biomass content of greater than or equal to 5%, and thus can contribute to global environmental protection. Furthermore, in the packaging material, the fossil fuel-derived polyolefin layer containing no biomass-derived polyolefin is disposed as an outermost layer of the substrate layer facing the printing layer, thus achieving higher adhesion between the substrate layer and the printing layer as compared with the case where the biomass-derived polyolefin layer is the outermost layer of the substrate layer facing the printing layer. The adhesion between the fossil fuel-derived polyolefin layer and the printing layer is higher than the adhesion between the biomass-derived polyolefin layer and the printing layer, and the adhesion between the fossil fuel-derived polyolefin layer and the biomass-derived polyolefin layer is also high, thus allowing the packaging material to have high lamination strength.

The fossil fuel-derived polyolefin layer may contain fossil fuel-derived polypropylene and fossil fuel-derived polyethylene. The packaging material including such a fossil fuel-derived polyolefin layer can have both heat resistance and lamination strength at a high level.

The packaging material may further include an adhesion layer that is disposed between the fossil fuel-derived polyolefin layer and the printing layer. The packaging material including the adhesion layer can have even higher adhesion between the substrate layer and the printing layer.

A surface of the substrate layer facing the printing layer may be surface treated. The use of the substrate layer whose surface facing the printing layer is surface treated can achieve even higher adhesion between the substrate layer and the printing layer, preventing delamination between these layers.

The packaging material may further include a polyolefin layer. The packaging material further including the polyolefin layer has a larger thickness and has higher stiffness, and thus has better handleability and leads to less occurrence of sealing failure during bag formation.

(Third aspect)

In order to achieve the third object, the present inventors have studied a cause of the above problem. First, the present inventors have noticed that the substrate layer containing bio-polypropylene as propylene tends to contain a large amount of low-molecular-weight components. Thus, the present inventors have considered that the low-molecular-weight components may bleed out to a surface of the substrate layer and appear on the surface, causing an inorganic material layer to be peeled off from the substrate layer, resulting in deterioration in barrier performance. Therefore, as a result of further studies, the present inventors have found that the following invention will solve the above problem.

That is, an aspect of the present disclosure is a barrier film including a substrate layer, and an inorganic material layer, wherein the substrate layer is composed of a resin containing bio-polypropylene, and a resin composition containing inorganic particles.

In the barrier film according to the third aspect, when the substrate layer contains low-molecular-weight components of bio-polypropylene, due to the inorganic particles contained in the substrate layer, the low-molecular-weight components need to avoid the inorganic particles to reach a surface of the substrate layer. Thus, the low-molecular-weight components bleed out and reach the surface of the substrate layer through a longer path. As a result, the low-molecular-weight components are less likely to appear on the surface of the substrate layer; thus, the inorganic material layer is less likely to be peeled off from the substrate layer. This prevents a gap from being formed between the inorganic material layer and the substrate layer, preventing deterioration in barrier performance. Furthermore, the barrier film contains bio-polypropylene in the substrate layer. Thus, the barrier film of the present disclosure can prevent deterioration in barrier performance while having a lower environmental load.

The barrier film is preferably configured such that at least the inorganic material layer is provided on the substrate layer, the substrate layer is obtained by reacting a raw material containing bio-propylene in a presence of the inorganic particles, and the inorganic particles contain at least a metal or a metal oxide.

In such a case, when the inorganic particles are composed of at least a metal or a metal oxide, in a reaction in which bio-polypropylene is formed from a raw material containing bio-propylene, the metal or the metal oxide acts as a catalyst which is better than an acid catalyst or a base catalyst, promoting formation of bio-polypropylene having a high molecular weight. Thus, when a raw material containing bio-propylene is reacted in the presence of the inorganic particles, the reaction is effectively carried out, leading to a reduction in the amount of low-molecular-weight components of bio-polypropylene. That is, a smaller amount of low-molecular-weight components appear on the surface of the substrate layer due to bleed-out. As a result, the inorganic material layer is easily formed on the substrate layer, allowing formation of the inorganic material layer as a dense layer, thus further preventing deterioration in barrier performance.

For example, when the inorganic particles are composed of a metal, first, as shown in the following formula (1), two bio-propylene molecules (first propylene) having a double bond are adsorbed on the metal (Metal), and then electron transfer from the metal to the double bonds of the first propylene causes the metal and the first propylene to be bonded to form a bonded body. At this time, in the metal in the bonded body, a reaction easily proceeds due to free electrons. Next, as shown in the following formula (2), when another bio-propylene molecule (second propylene) approaches the bonded body, the bonding between the metal and the first propylene is broken, and then the second propylene is adsorbed on the metal and this causes electron transfer from the metal to the second propylene, and the first propylene in which the bonding is broken is bonded to the second propylene. Thus, as shown in the following formula (3), the second propylene is bonded to the bonded body to form a new bonded body, thereby forming bio-polypropylene having a high molecular weight. In the following formulas (1) to (3), before bonding, bio-propylene is represented as only a portion of the bio-propylene having a double bond (-C=C-), and after bonding, the double bond of the bio-propylene is changed to a single bond.

[Chem. 1]

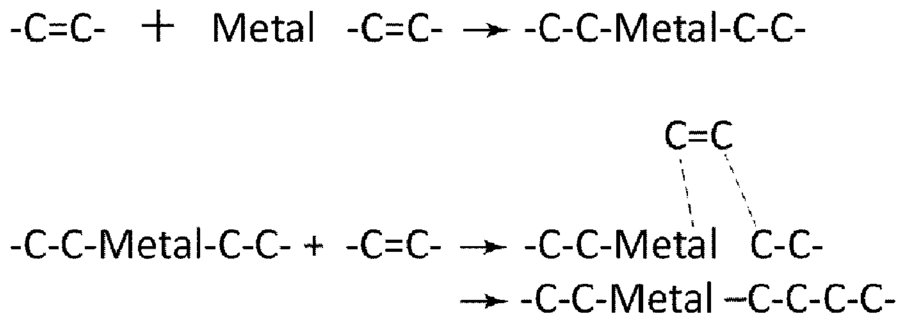

···(1)

···(2)

···(3)

When a metal oxide is used instead of a metal, the metal oxide is considered to act in the same manner as the metal due to electron transfer via oxygen.

In the barrier film, the inorganic particles preferably contain a metal oxide.

In such a case, deterioration in barrier performance of the barrier film can be effectively prevented.

In the barrier film, the metal oxide is preferably zeolite.

In such a case, deterioration in barrier performance can be more effectively prevented as compared with the case where the metal oxide is a metal oxide other than zeolite.

In the barrier film, the substrate layer preferably has a biomass content of greater than or equal to 50%.

In such a case, deterioration in barrier performance can be more effectively prevented as compared with the case where the substrate layer has a biomass content of less than 50%.

The barrier film is preferably configured to further include an adhesion layer between the substrate layer and the inorganic material layer and configured such that the adhesion layer contains an organic material.

In such a case, the adhesion layer achieves even higher adhesion between the substrate layer and the inorganic material layer.

The barrier film is preferably configured to further include a gas barrier coating layer that coats the inorganic material layer and configured such that the gas barrier coating layer contains Si and C.

In such a case, Si contained in the gas barrier coating layer achieves even higher adhesion between the gas barrier coating layer and the inorganic material layer, and C contained in the gas barrier coating layer allows the gas barrier coating layer to have higher flexibility, thus preventing occurrence of cracking even when an excessive bending stress is applied to the barrier film.

Another aspect of the present disclosure is a packaging material including the barrier film, and a sealant layer that is provided on a side of the barrier film on which the inorganic material layer is located.

The packaging material includes the barrier film, and thus can prevent deterioration in barrier performance while having a lower environmental load.

Still another aspect of the present disclosure is a packaging container including the packaging material.

The packaging container includes the packaging material, and thus can prevent deterioration in barrier performance while having a lower environmental load. Therefore, even when contents are enclosed in the packaging container, the packaging container can prevent deterioration in quality of the contents for a long period.

Another aspect of the present disclosure is a packaging product including the packaging container, and contents that are enclosed in the packaging container.

The packaging product includes the packaging container, and thus can prevent deterioration in barrier performance while having a lower environmental load. Therefore, the packaging product of the present disclosure can prevent deterioration in quality of the contents for a long period.

[Advantageous Effects of the Invention]

The first aspect of the present disclosure provides a barrier film that contributes to global environmental protection and that has higher adhesion between a substrate layer containing a biomass-derived polyolefin and a metal oxide layer, and a packaging material including the barrier film. The second aspect of the present disclosure provides a packaging material that contributes to global environmental protection and that has higher adhesion between a substrate layer containing a biomass-derived polyolefin and a printing layer. The third aspect of the present disclosure provides a barrier film, a packaging material, a packaging container, and a packaging product capable of preventing deterioration in barrier performance while having a lower environmental load.

[Brief Description of the Drawings]

Fig. 1 is a schematic cross-sectional view of a barrier film according to an embodiment.

Fig. 2 is a schematic cross-sectional view of a barrier film according to an embodiment.

Fig. 3 is a schematic cross-sectional view of a packaging material according to an embodiment.

Fig. 4 is a schematic cross-sectional view of a packaging material according to an embodiment.

Fig. 5 is a schematic cross-sectional view of a packaging material according to an embodiment.

Fig. 6 is a schematic cross-sectional view of a packaging material according to an embodiment.

Fig. 7 is a schematic cross-sectional view of a barrier film according to an embodiment.

Fig. 8 is a schematic cross-sectional view of a packaging material according to an embodiment.

Fig. 9 is a schematic cross-sectional view of a packaging product according to an embodiment.

[Description of the Embodiments]

Embodiments of the present disclosure will be described in detail below. The present disclosure is not limited to the following embodiments.

<Barrier film according to the first aspect>

A barrier film according to the first aspect includes a substrate layer and a metal oxide layer, and may include another layer in addition to these layers.

Fig. 1 is a cross-sectional view of an embodiment of the barrier film according to the first aspect. A barrier film 100a shown in Fig. 1 includes a substrate layer 10a including a biomass-derived polyolefin layer 1a and a fossil fuel-derived polyolefin layer 2a, and a metal oxide layer 5. The layers constituting the barrier film will be described below.

(Substrate layer 10a)

The substrate layer 10a is a layer serving as a support, and includes the biomass-derived polyolefin layer 1a containing a biomass-derived polyolefin, and the fossil fuel-derived polyolefin layer 2a containing no biomass-derived polyolefin.

In the present disclosure, a biomass-derived polyolefin refers to a polyolefin having a biomass raw material.

The biomass-derived polyolefin may be, for example, biomass-derived polyethylene manufactured by Braskem. Braskem produces linear low-density polyethylene (LLDPE), highdensity polyethylene (HDPE), and low-density polyethylene (LDPE) from a renewable natural raw material, and sells these types of polyethylene.

The melt flow rate of the biomass-derived polyolefin at 190°C is not specifically limited, and is, for example,

less than or equal to 10 g/10 minutes, and preferably less than or equal to 5 g/10 minutes. The melt flow rate value in the present disclosure refers to a melt flow rate value measured under conditions of a predetermined temperature (190°C, or 230°C described later) and a load of 2.16 kg in accordance with the method described in JIS K 7210-1: 2014.

The density of the biomass-derived polyolefin is, for example, 0.91 to 0.96 g/cm$^3$, and may be 0.91 to 0.92 g/cm$^3$.

The biomass raw material use rate (biomass content) of the biomass-derived polyolefin is, for example, 1 to 100%, and may be 50 to 100%. The biomass content of a fossil fuel-derived polyolefin is 0%, and in this regard, the biomass-derived polyolefin and the fossil fuel-derived polyolefin are clearly distinguished from each other. In the present disclosure, the biomass content can be measured by radiocarbon concentration measurement of $^{14}C$ concentration.

The biomass-derived polyolefin layer 1a may be a layer composed of a biomass-derived polyolefin alone (a layer containing no fossil fuel-derived polyolefin), or may be a layer composed of a mixed resin of a biomass-derived polyolefin and a fossil fuel-derived polyolefin. A layer composed of a mixed resin often has better physical properties than a layer containing no fossil fuel-derived polyolefin. For example, a mixed resin obtained by mixing biomass-derived polyethylene and fossil fuel-derived polypropylene has higher heat resistance, boiling resistance, and retort resistance than biomass-derived polyethylene.

The content of biomass-derived polyolefin in the biomass-derived polyolefin layer 1a with respect to the total mass of the biomass-derived polyolefin and the fossil fuel-derived polyolefin is, for example, 1 to 100 mass%, preferably 5 to 95 mass%, and more preferably 10 to 90 mass%. When the content of biomass-derived polyolefin in the biomass-derived polyolefin layer 1a is greater than or equal to 10 mass%, contribution can be made to global environmental protection in terms of carbon neutrality. Furthermore, the content of fossil fuel-derived polyolefin in the biomass-derived polyolefin layer 1a with respect to the total mass of the biomass-derived polyolefin and the fossil fuel-derived polyolefin is 0 to 99 mass%, preferably 5 to 95 mass%, and more preferably 10 to 90 mass%. When the content of fossil fuel-derived polyolefin in the biomass-derived polyolefin layer 1a is greater than or equal to 10 mass%, an effect (e.g., heat resistance) derived from the fossil fuel-derived polyolefin can be sufficiently obtained.

When the biomass-derived polyolefin layer 1a is a layer composed of a mixed resin obtained by mixing a fossil fuel-derived polyolefin and a biomass-derived polyolefin, the biomass content of the biomass-derived polyolefin layer 1a is calculated by multiplying the mass ratio of the biomass-derived polyolefin with respect to the total mass of the obtained mixed resin by the biomass content of the biomass-derived polyolefin as a raw material.

The thickness of the biomass-derived polyolefin layer 1a is, for example, 10 to 150 μm, and preferably 15 to 100 μm.

Examples of the fossil fuel-derived polyolefin include homopolymers, block copolymers, and random copolymers of polyethylene and propylene.

The melt flow rate of the fossil fuel-derived polyolefin at 230°C is not specifically limited, and is, for example, less than or equal to 15 g/10 minutes, and preferably less than or equal to 10 g/10 minutes.

The density of the fossil fuel-derived polyolefin is, for example, 0.8 to 0.99 g/cm$^3$, and may be 0.85 to 0.95 g/cm$^3$.

The fossil fuel-derived polyolefin layer 2a may be a layer composed of a single type of fossil fuel-derived polyolefin, but is preferably a layer composed of two or more types of fossil fuel-derived polyolefins. For example, when the fossil fuel-derived polyolefin layer 2a is composed of fossil fuel-derived polyethylene and fossil fuel-derived polypropylene, the fossil fuel-derived polyolefin layer 2a can have both adhesion derived from fossil fuel-derived polyethylene and heat resistance derived from fossil fuel-derived polypropylene.

The thickness of the fossil fuel-derived polyolefin layer 2a is, for example, 0.1 to 5 μm, and preferably 0.2 to 2 μm.

The substrate layer 10a may be, for example, a laminate that is obtained by multilayer extrusion of a material constituting the biomass-derived polyolefin layer 1a and a material constituting the fossil fuel-derived polyolefin layer 2a and thus includes the fossil fuel-derived polyolefin layer 2a as an outermost layer of the substrate layer 10a facing the metal oxide layer 5. The substrate layer 10a including the fossil fuel-derived polyolefin layer 2a as an outermost layer of the substrate layer 10a facing the metal oxide layer 5 achieves higher adhesion between the substrate layer 10a and the metal oxide layer 5. When one or both of the material constituting the biomass-derived polyolefin layer 1a and the material constituting the fossil fuel-derived polyolefin layer 2a contain fossil fuel-derived polypropylene, the layers of the substrate layer can be easily laminated by multilayer extrusion.

The total mass of the biomass-derived polyolefin and the fossil fuel-derived polyolefin with respect to the total mass of the substrate layer 10a is, for example, greater than or equal to 90 mass%, and may be greater than or equal to 95 mass%, or greater than or equal to 98 mass%. The substrate layer 10a may contain, for example, an anti-blocking agent, an antistatic agent, an antioxidant, a slip agent, a photostabilizer, a flame retardant, and the like, in addition to the biomass-derived polyolefin and the fossil fuel-derived polyolefin.

When the substrate layer 10a contains an anti-blocking agent, the anti-blocking agent may be added to one or both of the biomass-derived polyolefin layer 1a and the fossil fuel-derived polyolefin layer 2a as necessary. The substrate layer 10a containing an anti-blocking agent achieves higher film conveyability and windability.

The anti-blocking agent may be silica particles, acrylic particles, styrene particles, talc particles, or the like.

The content of anti-blocking agent with respect to the total mass of the substrate layer 10a is preferably 100

to 10000 ppm, and more preferably 500 to 5000 ppm. When the content of anti-blocking agent is greater than or equal to 100 ppm, blocking is easily prevented, and when the content of anti-blocking agent is less than or equal to 10000 ppm, it is possible to prevent problems such as meandering movement during conveyance and deviation in winding.

The particle size of the anti-blocking agent is preferably 0.05 to 20 μm, and more preferably 0.1 to 10 μm, but an anti-blocking agent having a particle size larger than the film thickness is not preferable. When the particle size of the anti-blocking agent is greater than or equal to 0.05 μm, the function of the anti-blocking agent is sufficiently exerted, and when the particle size of the anti-blocking agent is less than or equal to the film thickness, a film is easily formed.

The biomass content of the substrate layer 10a is, for example, greater than or equal to 5%, and may be greater than or equal to 7%, or greater than or equal to 10%. When the biomass content of the substrate layer 10a is in the above range, contribution can be made to global environmental protection. The biomass content of the substrate layer 10a is calculated by multiplying the biomass content of the biomass-derived polyolefin layer 1a by the mass ratio of the biomass-derived polyolefin layer 1a with respect to the total mass of the substrate layer 10a.

(Metal oxide layer 5)

The metal oxide layer 5 is a layer composed of a metal oxide, and may contain at least one atom selected from the group consisting of Si, Al, Mg, Sn, Ti, and In, and from the viewpoint of barrier performance, the metal oxide layer 5 preferably contains a Si atom or an Al atom. The metal oxide layer 5 may be a layer composed of a metal oxide such as SiOx or AlOx, and may contain a nitrogen or carbon atom. From the viewpoint of gas barrier performance, the metal oxide layer 5 is preferably a layer composed of SiOx, and from the viewpoint of productivity, the metal oxide layer 5 is preferably a layer composed of AlOx. The barrier film according to the present embodiment includes the metal oxide layer 5 but has high adhesion between the substrate layer 10a and the metal oxide layer 5, and thus has good durability against an external force such as a bending or stretching force, preventing deterioration in barrier performance when such an external force is applied to the barrier film.

The metal oxide layer 5 can be formed, for example, by vacuum deposition. The vacuum deposition may be physical vapor deposition or chemical vapor deposition. Examples of the physical vapor deposition include, but are not limited to, vacuum vapor deposition, sputtering vapor deposition, and ion plating. Examples of the chemical vapor deposition include, but are not limited to, thermal CVD, plasma CVD, and photo CVD.

In the present disclosure, in particular, the method of forming the metal oxide layer 5 is preferably resistance heating vacuum vapor deposition, electron beam (EB) heating vacuum vapor deposition, induction heating vacuum vapor deposition, sputtering, reactive sputtering, dual magnetron sputtering, plasma-enhanced chemical vapor deposition (PECVD), or the like.

The metal oxide layer 5 preferably has a thickness of greater than or equal to 3 nm and less than or equal to 100 nm. A metal oxide layer 5 having a thickness of greater than or equal to 3 nm is more likely to provide water vapor barrier performance. A metal oxide layer 5 having a thickness of less than or equal to 100 nm tends to prevent a situation where cracking caused by increased internal stress results in deterioration in water vapor barrier performance. Furthermore, the metal oxide layer 5 having a thickness of less than or equal to 100 nm requires a smaller amount of material used, less time for film formation, and the like, leading to a lower cost, which is preferable from the economic viewpoint.

(Surface treatment)

In order to enhance the adhesion between the substrate layer 10a and the metal oxide layer 5, the surface of the substrate layer 10a facing the metal oxide layer 5 may be subjected to surface treatment such as plasma treatment or corona treatment. Such surface treatment improves performance such as adhesion and barrier performance.

The barrier film according to the first aspect may include another layer in addition to the substrate layer 10a and the metal oxide layer 5. Fig. 2 is a cross-sectional view of an embodiment of the barrier film according to the first aspect, and in addition to the configuration of the barrier film shown in Fig. 1, the barrier film includes an adhesion layer 4a between the substrate layer 10a and the metal oxide layer 5, and further includes a protective layer 6 on the surface of the metal oxide layer 5 facing away from the substrate layer 10a.

(Adhesion layer 4a)

The adhesion layer (anchor coat layer) 4a may be provided on the surface of the substrate layer 10a on which the metal oxide layer 5 is laminated. The adhesion layer 4a can provide effects such as higher adhesion performance between the substrate layer 10a and the metal oxide layer 5, higher smoothness of the surface of the substrate layer 10a, adjustment of gloss, and prevention of cracking of the metal oxide layer 5 caused by stretching of the substrate layer 10a. When the surface of the substrate layer 10a has higher smoothness, the metal oxide layer 5 is easily formed as a uniform layer having no defects; thus, high barrier performance is more likely to be achieved. The adhesion layer

4a can be formed using an adhesion layer forming composition (anchor coating agent).

Examples of a resin used for the anchor coating agent include an acrylic resin, an epoxy resin, an acrylic urethane resin, a polyester polyurethane resin, and a polyether polyurethane resin. From the viewpoint of achieving higher adhesion, in particular, an acrylic urethane resin and a polyester polyurethane resin are preferably used. An anchor coating agent containing such a resin or a component that reacts to form such a resin can be used to form the adhesion layer 4a.

The thickness of the adhesion layer 4a is not specifically limited, but is preferably in the range of 0.01 to 5 μm, more preferably in the range of 0.03 to 3 μm, and particularly preferably in the range of 0.05 to 2 μm. The adhesion layer 4a having a thickness of greater than or equal to the lower limit tends to provide more sufficient interlayer adhesion strength, and the adhesion layer 4a having a thickness of less than or equal to the upper limit tends to be more likely to achieve desired gas barrier performance.

Furthermore, the method of coating the adhesion layer 4a on the substrate layer 10a may be a known coating method without particular limitation, and examples of the coating method include immersion (dipping), and methods using a spray, a coater, a printer, a brush, or the like. Examples of the types of coaters and printers used in these methods and the coating methods include a gravure coater, a reverse roll coater, a micro gravure coater, a chamber doctor combined coater, an air-knife coater, a dip coater, a bar coater, a comma coater, and a die coater for a direct gravure method, a reverse gravure method, a kiss reverse gravure method, and an offset gravure method.

Furthermore, as the coating amount of the adhesion layer, the mass per unit area after coating and drying of the anchor coating agent is preferably 0.01 to 5 $g/m^2$, and more preferably 0.03 to 3 $g/m^2$. The anchor coating agent having a mass per unit area after coating and drying of greater than or equal to the lower limit tends to allow sufficient film formation, and the anchor coating agent having a mass per unit area after coating and drying of less than or equal to the upper limit tends to be more likely to be sufficiently dried and less likely to cause residual solvent to remain.

The method of drying the adhesion layer 4a is not specifically limited, and may be a method in which the adhesion layer 4a is naturally dried, a method in which the adhesion layer 4a is dried in an oven set to a predetermined temperature, or a method in which the adhesion layer 4a is dried using a dryer attached to the coater, such as an arch dryer, a floating dryer, a drum dryer, or an infrared dryer. Furthermore, the drying conditions may be appropriately selected according to the drying method, and for example, in the method in which the adhesion layer 4a is dried in an oven, the adhesion layer 4a is preferably dried at a temperature of 60 to 100°C for approximately 1 second to 2 minutes.

(Protective layer 6)

The barrier film according to the present embodiment may further include the protective layer 6 that is disposed on the surface of the metal oxide layer 5 facing away from the substrate layer 10a. In the barrier film including the protective layer 6, the metal oxide layer 5 can have higher wear resistance, allowing the barrier film to exhibit higher barrier performance. The protective layer 6 can be formed on the metal oxide layer 5 by coating or the like.

The protective layer 6 may be, for example, a cured product of a protective layer forming raw material containing a polyacrylic acid and a silane compound, or a polyvinyl alcohol resin and a silane compound. The protective layer forming raw material may contain metal oxide particles such as particles of silicon oxide, zinc oxide, aluminum oxide, iron oxide, or magnesium oxide, a dispersant, a surface conditioner, an antifoaming agent, and the like. Examples of the silane compound include tetraalkoxysilanes such as tetramethoxysilane and tetraethoxysilane, and silazanes such as hexamethyldisilazane. The silane compound may be a compound commonly used as a silane coupling agent, or a polysiloxane compound having a siloxane bond. The use of a silane coupling agent achieves even higher strength in the overcoat layer; thus, higher barrier performance and water resistance are more likely to be obtained. Examples of the silane coupling agent include epoxy silanes (glycidoxypropyltrimethoxysilane, glycidoxypropyltriethoxysilane, etc.), (meth)acrylsilanes (acryloxypropyltrimethoxysilane, etc.), aminosilanes, ureidosilanes, isocyanate silanes, isocyanurate silanes (tris-(3-trialkoxysilylpropyl)isocyanurate, etc.), and mercaptosilanes.

The thickness of the protective layer 6 is, for example, 0.05 to 2 μm, and preferably 0.1 to 1 μm.

<Barrier film according to the third aspect>

Fig. 7 is a cross-sectional view of an embodiment of the barrier film according to the third aspect. As shown in Fig. 7, a barrier film 100c includes a substrate layer 10c, an inorganic material layer 11, and a gas barrier coating layer 12 in this order. The substrate layer 10c is composed of a resin containing bio-polypropylene, and a resin composition containing inorganic particles. The barrier film 100c may further include an adhesion layer 4c between the substrate layer 10c and the inorganic material layer 11.

In the barrier film 100c, when the substrate layer 10c contains low-molecular-weight components of bio-polypropylene, due to the inorganic particles contained in the substrate layer 10c, the low-molecular-weight components need to avoid the inorganic particles to reach a surface of the substrate layer 10c. Thus, path length for low-molecular-weight components to bleed out and reach the surface of the substrate layer 10c is increased. As a result, low-molecular-weight components are less likely to appear on the surface of the substrate layer 10c; thus, the inorganic material layer 11 is less likely to peel off from the substrate layer 10c. This prevents a gap from being formed between the inorganic material layer 11 and the substrate layer 10c, preventing deterioration in barrier performance. Furthermore, the barrier film 100c contains bio-polypropylene in the substrate layer 10c. Thus, the barrier film 100c can prevent deterioration in barrier performance while having a lower environmental load.

The substrate layer 10c, the adhesion layer 4c, the inorganic material layer 11, and the gas barrier coating layer 12 will be described in detail below.

(Substrate layer 10c)

The substrate layer 10c is a layer serving as a support of the adhesion layer 4c, the inorganic material layer 11, and the gas barrier coating layer 12, and is composed of a resin containing bio-polypropylene, and a resin composition containing inorganic particles.

The bio-polypropylene may be a homopolymer of bio-propylene, or a copolymer of bio-propylene and another polymerizable monomer. The polymerizable monomer may be a monomer derived from biomass or a monomer derived from petroleum. Bio-polypropylene can be obtained by polymerizing a raw material containing bio-propylene. Bio-propylene can be obtained, for example, by reacting at least one of bio-ethanol and bio-ethylene as a raw material. Bio-ethanol can be obtained by fermenting a biomass-derived polysaccharide (e.g., corn or sugarcane) used as a raw material. Bio-ethylene can be obtained by dehydrating bio-ethanol.

The above resin may further contain a resin other than bio-polypropylene if necessary. Such a resin may be, for example, petroleum-derived polypropylene, or an olefin such as polyethylene. The olefin may be derived from petroleum or biomass.

The inorganic particles are not specifically limited as long as the inorganic particles are composed of an inorganic material, and examples of the inorganic particles include particles of a metal, metal oxide, silica, and glass. These may be used singly or as a mixture of two or more. The inorganic particles are used to prevent low-molecular-weight components of bio-polypropylene from passing through.

The inorganic particles preferably contain a metal oxide. In such a case, deterioration in barrier performance of the barrier film 100c can be effectively prevented.

The metal is not specifically limited, and may be a transition metal, a non-transition metal, or a mixture thereof, but the metal preferably contains a transition metal. Examples of the transition metal include nickel, platinum, and silver. These may be used singly or as a mixture of two or more. Examples of the non-transition metal include zinc.

A metal for the metal oxide may be the same as the metal described above. Examples of the metal oxide include nickel oxide, zinc oxide, manganese dioxide, alumina, zeolite, and iridium nitrate. These may be used singly or as a mixture of two or more. Of these, the metal oxide is preferably zeolite. In such a case, deterioration in barrier performance can be more effectively prevented as compared with the case where the metal oxide is a metal oxide other than zeolite.

The inorganic particles may further contain phosphorus and potassium if necessary.

The average particle size of the inorganic particles is not specifically limited, but is preferably 0.005 to 1000 μm. In such a case, as compared with the case where the average particle size of the inorganic particles is less than 0.005 μm, the low-molecular-weight components bleed out and reach the surface of the substrate layer through a longer path, thus effectively preventing deterioration in barrier performance. Furthermore, in the case where the average particle size of the inorganic particles is in the above range, as compared with the case where the average particle size of the inorganic particles exceeds 1000 μm, the surface of the substrate layer 10c has even higher smoothness, allowing the inorganic material layer 11 to have an even more uniform thickness, thus enabling the inorganic material layer 11 to exhibit an even more uniform barrier performance.

The amount of inorganic particles is not specifically limited, but is preferably, with respect to 100 parts by mass of resin, greater than or equal to 0.01 parts by mass, more preferably greater than or equal to 0.05 parts by mass, and particularly preferably greater than or equal to 0.1 parts by mass. In such a case, deterioration in barrier performance can be effectively prevented as compared with the case where the amount of inorganic particles with respect to 100 parts by mass of resin is less than 0.01 parts by mass. Furthermore, the amount of inorganic particles with respect to 100 parts by mass of resin is preferably less than or equal to 1 part by mass, and more preferably less than or equal to 0.5 parts by mass. In such a case, as compared with the case where the amount of inorganic particles with respect to 100 parts by mass of resin exceeds 1 part by mass, the substrate layer 10c contains a smaller amount of inorganic particles, thus further preventing occurrence of cracking even when an excessive bending stress is applied to the substrate layer 10c.

The biomass content of the substrate layer 10c is not specifically limited, but is preferably greater than or equal to 50%, and more preferably greater than or equal to 70%. In the case where the biomass content of the substrate layer 10c is greater than or equal to 50%, deterioration in barrier performance of the barrier film 100c can be more effectively

prevented as compared with the case where the biomass content of the substrate layer 10c is less than 50%. From the viewpoint of further preventing deterioration in barrier performance of the barrier film 100c, the biomass content of the substrate layer 10c is preferably less than or equal to 98%, and more preferably less than or equal to 95%.

The biomass content of the substrate layer 10c according to the third aspect can be calculated based on the following equation, where A represents the content of $C^{14}$ in the substrate layer 10c.

$$\text{Biomass content (\%)} = A/105.5 \times 100$$

The resin composition may further contain ethylene, butene, or the like to obtain a copolymer or a terpolymer. Furthermore, if necessary, the resin composition may further contain, within a range that does not impair the objects of the present disclosure, various additives such as a tackifier, a heat-resistant stabilizer, a weather-resistant stabilizer, an antioxidant, an ultraviolet absorber, a lubricant, a slip agent, a nucleating agent, an anti-blocking agent, an antistatic agent, an antifogging agent, a pigment, a dye, and an inorganic or organic filler.

The substrate layer 10c may be a stretched film or an unstretched film, but from the viewpoint of gas barrier performance, the substrate layer 10c is preferably a stretched film. Examples of the stretched film include a uniaxially stretched film and a biaxially stretched film, and a biaxially stretched film achieves higher heat resistance and is thus preferable.

The thickness of the substrate layer 10c is not specifically limited, and may be, for example, less than or equal to 0.1 mm. In particular, the thickness of the substrate layer 10c is preferably less than or equal to 40 μm, more preferably less than or equal to 35 μm, and particularly preferably less than or equal to 30 μm. In the case where the thickness of the substrate layer 10c is less than or equal to 40 μm, the barrier film 100c has even higher flexibility and exhibits even higher oxygen gas barrier performance as compared with the case where the thickness of the substrate layer 10c exceeds 40 μm. From the viewpoint of achieving higher strength, the thickness of the substrate layer 10c is preferably greater than or equal to 10 μm, and more preferably greater than or equal to 12 μm.

(Adhesion layer 4c)

The adhesion layer (anchor coat layer) 4c is a layer for achieving even higher adhesion between the substrate layer 10c and the inorganic material layer 11, and is provided between the substrate layer 10c and the inorganic material layer 11.

The material constituting the adhesion layer 4c is not specifically limited as long as the material can achieve higher adhesion between the substrate layer 10c and the inorganic material layer 11, but the material preferably contains an organic material. In such a case, the adhesion layer 4c achieves even higher adhesion between the substrate layer 10c and the inorganic material layer 11. Examples of the organic material include resins such as polyester resins, polyamide resins, polyurethane resins (polyester urethane, acrylic urethane, resins obtained by reacting polyols with isocyanates), epoxy resins, phenol resins, (meth)acrylic resins, polyvinyl acetate resins, ethylene-vinyl alcohol copolymers, polyolefin resins such as polyethylene and polypropylene, and cellulose resins. These may be used singly or as a mixture of two or more.

The adhesion layer 4c may contain Si. In such a case, the adhesion layer 4c can be obtained, for example, by curing a resin composition containing any of the above resins and a silane coupling agent.

The thickness of the adhesion layer 4c is not specifically limited as long as the adhesion layer 4c can achieve higher adhesion between the substrate layer 10c and the inorganic material layer 11, but the thickness of the adhesion layer 4c is preferably greater than or equal to 30 nm. In such a case, as compared with the case where the thickness of the adhesion layer 4c is less than 30 nm, the surface of the adhesion layer 4c has even higher smoothness than the surface of the substrate layer 10c, thus allowing the inorganic material layer 11 to have a more uniform thickness and achieve even higher gas barrier performance. This enables the barrier film 100c to exhibit even higher gas barrier performance. The thickness of the adhesion layer 4c is more preferably greater than or equal to 40 nm, and still more preferably greater than or equal to 50 nm. An adhesion layer 4c having a large thickness can further prevent deterioration in water vapor barrier performance when an external force such as a stretching force is applied to the barrier film 100c. The thickness of the adhesion layer 4c is preferably less than or equal to 300 nm. In such a case, the barrier film 100c has even higher flexibility as compared with the case where the thickness of the adhesion layer 4c exceeds 300 nm. The thickness of the adhesion layer 4c is more preferably less than or equal to 200 μm.

(Inorganic material layer 11)

The inorganic material layer 11 is a barrier layer containing an inorganic material. The barrier film 100c including the inorganic material layer 11 can exhibit even higher gas barrier performance without having a large thickness.

The inorganic material may be a metal, a metal oxide, a metal nitride, or a metal oxynitride. Examples of the metal include metal aluminum (Al), and examples of the metal oxide include silicon oxide (SiOx) and aluminum oxide (AlOx). Examples of the metal nitride include silicon nitride (SiN), and examples of the metal oxynitride include silicon oxynitride (SiON).
From the viewpoint of transparency and barrier performance, the material constituting the inorganic material layer 11 is preferably aluminum oxide or silicon oxide. The material constituting the inorganic material layer 11 is particularly preferably silicon oxide due to high tensile stretchability during processing.
When the inorganic material layer 11 is composed of a silicon oxide film, from the viewpoint of gas barrier performance, the O/Si ratio (molar ratio) is preferably 1.2 to 1.9.
The inorganic material layer 11 may be composed of a single layer or a plurality of layers.
The thickness of the inorganic material layer 11 is not specifically limited, but is preferably greater than or equal to 5 nm. In such a case, the barrier film 100c exhibits even higher gas barrier performance as compared with the case where the thickness of the inorganic material layer 11 is less than 5 nm. The thickness of the inorganic material layer 11 is more preferably greater than or equal to 10 nm, and particularly preferably greater than or equal to 20 nm.
Furthermore, the thickness of the inorganic material layer 11 is preferably less than or equal to 100 nm. In such a case, as compared with the case where the thickness of the inorganic material layer 11 exceeds 100 nm, it is possible to prevent cracking caused by deformation of the inorganic material layer 11 due to an internal stress, thus easily preventing deterioration in gas barrier performance. Furthermore, in such a case, the amount of material used is small, and less time required for film formation is more likely to lead to a lower cost. From the viewpoint of achieving a lower cost, the thickness of the inorganic material layer 11 is more preferably less than or equal to 50 nm, and particularly preferably less than or equal to 40 nm.

(Gas barrier coating layer 12)

The gas barrier coating layer 12 is composed of a cured product of a gas barrier coating layer forming composition.
The gas barrier coating layer 12 preferably contains Si and C.
In such a case, Si contained in the gas barrier coating layer 12 achieves even higher adhesion between the gas barrier coating layer 12 and the inorganic material layer 11, and C contained in the gas barrier coating layer 12 allows the gas barrier coating layer 12 to have higher flexibility, thus preventing occurrence of cracking even when an excessive bending stress is applied to the barrier film 100c.
It is possible to determine whether the gas barrier coating layer 12 contains Si and C, for example, by examining whether Si and C are detected on a surface of the gas barrier coating layer 12 by X-ray photoelectron spectroscopy (hereinafter also referred to as "XPS").
Specifically, in XPS, in order to examine whether Si and C are detected, a narrow scan analysis is performed to obtain a spectrum under the following measurement conditions using the following measuring device.

<Measuring device>

JPS-9030 photoelectron spectrometer, manufactured by JEOL Ltd.

<Measurement conditions>

(Spectrum collection conditions)

Incident X-ray: MgKα (monochromatic x-ray, hv = 1253.6 eV)
X-ray output: 10 W (10 kV - 10 mA)
X-ray scanning area (measurement region): Circular region with a diameter of 6 mm
Photoelectron capture angle: 90°

Specifically, the gas barrier coating layer 12 mainly contains a polyvinyl alcohol resin and a silane compound.
The polyvinyl alcohol resin may have vinyl alcohol units obtained by saponifying vinyl ester units, and examples of the polyvinyl alcohol resin include polyvinyl alcohol (PVA) and ethylene-vinyl alcohol copolymer (EVOH). From the viewpoint of versatility, solubility, and the like, PVA can be preferably used.
For example, the PVA may be a resin obtained by polymerizing a vinyl ester alone, such as vinyl acetate, vinyl formate, vinyl propionate, vinyl valerate, vinyl caprate, vinyl laurate, vinyl stearate, vinyl pivalate, or vinyl versatate,

followed by saponification.

The PVA may be a PVA modified by copolymerization or a post-modified PVA. The copolymerization-modified PVA is obtained, for example, by copolymerizing a vinyl ester and an unsaturated monomer copolymerizable with a vinyl ester, followed by saponification. The post-modified PVA is obtained by polymerizing a vinyl ester followed by saponification to obtain PVA, and then copolymerizing the PVA with an unsaturated monomer in the presence of a polymerization catalyst. From the viewpoint of achieving sufficient gas barrier performance, the amount of modification of the modified PVA may be less than 50 mol%, and from the viewpoint of obtaining the effect of modification, the amount of modification may be greater than or equal to 10 mol%.

Examples of the unsaturated monomer include olefins such as ethylene, propylene, isobutylene, α-octene, α-dodecene, and α-octadecene; hydroxy group-containing α-olefins such as 3-buten-1-ol, 4-pentyn-1-ol, and 5-hexen-1-ol; unsaturated acids such as acrylic acid, methacrylic acid, crotonic acid, maleic acid, maleic anhydride, itaconic acid, and undecylenic acid; nitriles such as acrylonitrile and methacrylonitrile; amides such as diacetone acrylamide, acrylamide, and methacrylamide; olefin sulfonic acids such as ethylenesulfonic acid, allylsulfonic acid, and methallylsulfonic acid; vinyl compounds such as alkyl vinyl ether, dimethylallyl vinyl ketone, N-vinylpyrrolidone, vinyl chloride, vinyl ethylene carbonate, 2,2-dialkyl-4-vinyl-1,3-dioxolane, glycerol monoallyl ether, and 3,4-diacetoxy-1-butene; vinylidene chloride; 1,4-diacetoxy-2-butene; vinylene carbonate; polyoxypropylene; and polyoxypropylene vinylamine. From the viewpoint of gas barrier performance, the unsaturated monomer is preferably an olefin, and particularly preferably ethylene.

Examples of the polymerization catalyst include radical polymerization catalysts such as azobisisobutyronitrile, benzoyl peroxide, and lauryl peroxide. The polymerization method is not specifically limited, and may be bulk polymerization, emulsion polymerization, solvent polymerization, or the like.

The degree of polymerization of the PVA is not specifically limited, but is preferably 300 to 3000. When the degree of polymerization is greater than or equal to 300, poor barrier performance is less likely to be caused. When the degree of polymerization is less than or equal to 3000, the viscosity is not excessively high, thus easily preventing poor coating suitability. The degree of saponification of the PVA is preferably greater than or equal to 80 mol%, more preferably greater than or equal to 90 mol%, and still more preferably greater than or equal to 98 mol%. Furthermore, the degree of saponification of the PVA may be less than or equal to 100 mol%, or may be less than or equal to 99.9 mol%. The degree of polymerization and degree of saponification of the PVA can be measured in accordance with the method described in JIS K 6726 (1994).

In general, EVOH is obtained by saponifying a copolymer of ethylene and an acid vinyl ester such as vinyl acetate, vinyl formate, vinyl propionate, vinyl valerate, vinyl caprate, vinyl laurate, vinyl stearate, vinyl pivalate, or vinyl versatate.

The ethylene unit content of the EVOH is not specifically limited, but is preferably greater than or equal to 10 mol%, more preferably greater than or equal to 15 mol%, still more preferably greater than or equal to 20 mol%, and particularly preferably greater than 35 mol%. Furthermore, the ethylene unit content of the EVOH is preferably less than or equal to 65 mol%, more preferably less than or equal to 55 mol%, and still more preferably less than 50 mol%. An ethylene unit content of greater than or equal to 10 mol% can maintain good gas barrier performance and dimensional stability at high humidity. An ethylene unit content of less than or equal to 65 mol% can achieve higher gas barrier performance.

The ethylene unit content of the EVOH can be obtained by an NMR method.

Saponification can be carried out with an alkali or acid, and from the viewpoint of the saponification rate, an alkali can be used. Examples of the alkali include alkali metal hydroxides such as sodium hydroxide and potassium hydroxide, and alkali metal alkoxides such as sodium ethylate, potassium ethylate, and lithium methylate.

Examples of the silane compound include tetraalkoxysilanes such as tetramethoxysilane and tetraethoxysilane, and silazanes such as hexamethyldisilazane. The silane compound may be a compound commonly used as a silane coupling agent, or a polysiloxane compound having a siloxane bond. Of such silane compounds, a silane coupling agent is preferable. The use of a silane coupling agent achieves even higher strength in the gas barrier coating layer 12; thus, higher barrier performance and water resistance are more likely to be obtained.

Examples of the silane coupling agent include epoxy silanes (glycidoxypropyltrimethoxysilane, glycidoxypropyltriethoxysilane, etc.), (meth)acrylsilanes (acryloxypropyltrimethoxysilane, etc.), aminosilanes, ureidosilanes, isocyanate silanes, isocyanurate silanes (tris-(3-trialkoxysilylpropyl)isocyanurate, etc.), and mercaptosilanes.

When the gas barrier coating layer 12 is formed, from the viewpoint of maintaining the adhesion between the gas barrier coating layer 12 and the inorganic material layer 11 and the gas barrier performance of the gas barrier coating layer 12, the amount of silane compound with respect to 1 part by mass of polyvinyl alcohol resin is preferably 0.1 to 5.0 parts by mass, more preferably 0.3 to 5.0 parts by mass, still more preferably 0.4 to 4.5 parts by mass, and particularly preferably 0.5 to 4.0 parts by mass.

The thickness of the gas barrier coating layer 12 is not specifically limited, but is preferably greater than or equal to 50 nm.

In such a case, the barrier film 100c exhibits even higher gas barrier performance as compared with the case

where the thickness of the gas barrier coating layer 12 is less than 50 nm.

From the viewpoint of achieving higher gas barrier performance, the thickness of the gas barrier coating layer 12 is more preferably greater than or equal to 100 nm, and particularly preferably greater than or equal to 200 nm.

The thickness of the gas barrier coating layer 12 is preferably less than or equal to 700 nm. In such a case, the barrier film 100c has even higher flexibility as compared with the case where the thickness of the gas barrier coating layer 12 exceeds 700 nm.

From the viewpoint of allowing the barrier film 100c to have even higher flexibility, the thickness of the gas barrier coating layer 12 is more preferably less than or equal to 500 nm, and particularly preferably less than or equal to 400 nm.

The barrier film 100c is preferably configured such that the inorganic material layer 11 and the gas barrier coating layer 12 are provided on the substrate layer 10c, the substrate layer 10c is obtained by reacting a raw material containing bio-propylene in the presence of the inorganic particles, and the inorganic particles contain at least a metal or a metal oxide. In such a case, when the inorganic particles are composed of at least a metal or a metal oxide, in a reaction in which bio-polypropylene is formed from a raw material containing bio-propylene, the metal or the metal oxide acts as a catalyst which is better than an acid catalyst or a base catalyst, promoting formation of bio-polypropylene having a high molecular weight. Thus, when a raw material containing bio-propylene is reacted in the presence of the inorganic particles, the reaction is effectively carried out, leading to a reduction in the amount of low-molecular-weight components of bio-polypropylene. That is, a smaller amount of low-molecular-weight components appear on the surface of the substrate layer 10c due to bleed-out. As a result, the inorganic material layer 11 is easily formed on the substrate layer 10c, allowing formation of the inorganic material layer 11 as a dense layer, thus further preventing deterioration in barrier performance.

The content of bio-propylene in the raw material is not specifically limited as long as the content is greater than 0 mass%, but the content is preferably greater than or equal to 50 mass%, and more preferably greater than or equal to 70 mass%.

The raw material may further contain ethylene or ethanol derived from petroleum in addition to bio-propylene, if necessary. The ethylene may be ethylene produced by a known production method, such as ethylene produced by catalytic cracking or steam cracking, or ethylene obtained by Fischer-Tropsch synthesis of coal. The ethanol may be produced by hydration reaction of ethylene, or may be produced from synthesis gas. Synthesis gas is obtained by gasifying a hydrocarbon such as coal, natural gas, or biomass.

The reaction temperature may be, for example, 300 to 700°C. The method of causing the raw material to come into contact with the inorganic particles is not specifically limited, and may be, for example, a method in which the raw material is introduced into a reactor filled with the inorganic particles. Examples of the reactor include a fixed bed reactor, a fluidized bed reactor, a batch reactor, and a semibatch reactor, and from the viewpoint of productivity of bio-polypropylene, the reactor is preferably a fixed bed reactor or a fluidized bed reactor, and more preferably a fixed bed reactor.

The inorganic particles may be composed of at least a metal or a metal oxide, and may be composed of a metal only, a metal catalyst only, or a mixture of a metal and a metal oxide. The inorganic particles preferably contain a metal oxide. In such a case, deterioration in barrier performance of the barrier film 100c can be effectively prevented.

The inorganic particles may be used as they are, or the inorganic particles mixed in a binder may be used.

The average particle size of the inorganic particles varies depending on the synthesis conditions of the inorganic particles and is thus not specifically limited, but is preferably 0.01 to 500 μm, and more preferably 0.05 to 300 μm. In such a case, as compared with the case where the average particle size of the inorganic particles is less than 0.01 μm, partial aggregation of the inorganic particles is less likely to occur, achieving higher handleability. Furthermore, in the case where the average particle size of the inorganic particles is in the above range, as compared with the case where the average particle size of the inorganic particles exceeds 500 μm, a larger specific surface area is obtained, achieving a higher catalyst activity.

The amount of inorganic particles used is not specifically limited, but is preferably 0.00000002 to 0.0002 parts by mass with respect to 100 parts by mass of raw material. Furthermore, the supply rate of the raw material is not specifically limited, and may be, for example, for each ton of inorganic particles, 0.002 to 200 tons/h, and more preferably 0.02 to 20 tons/h. The contact time of the inorganic particles and the raw material is not specifically limited, and is, for example, 0.001 seconds to 1 hour, and preferably 0.1 seconds to 1 minute.

<Method of producing barrier film>

Next, a method of producing the barrier film 100c will be described.

First, the substrate layer 10c is prepared. The substrate layer 10c may be prepared by reacting a raw material containing bio-propylene in the presence of the inorganic particles or by melt-mixing bio-polypropylene with the inorganic particles.

The substrate layer 10c can be obtained by single-layer extrusion molding or co-extrusion molding of the

obtained resin composition containing bio-polypropylene. The molding apparatus is not specifically limited, and may be a multilayer T-die extruder, a multilayer inflation molding machine, or the like. The substrate layer 10c may be composed of a single layer or a plurality of layers, but from the viewpoint of ease of production, the substrate layer 10c is preferably composed of one to five layers.

When the substrate layer 10c composed of an unstretched film is produced, the substrate layer 10c can be produced using a known casting apparatus.

When the substrate layer 10c composed of a stretched film is produced, the substrate layer 10c can be produced using a simultaneous biaxial stretching apparatus or a sequential biaxial stretching apparatus to stretch a film obtained by molding.

The stretching conditions may be, for example, conditions for obtaining a known OPP film. More specifically, in sequential biaxial stretching, for example, the conditions may be set so that the longitudinal stretching temperature is 100°C to 145°C, the longitudinal stretching ratio is in the range of 4.5 to 6 times, the lateral stretching temperature is 130°C to 190°C, and the lateral stretching ratio is in the range of 9 to 11 times.

Then, the adhesion layer 4c is formed on one surface of the substrate layer 10c.

Specifically, an adhesion layer forming composition for forming the adhesion layer 4c is applied onto one surface of the substrate layer 10c, and is heated and dried to form the adhesion layer 4c. At this time, the heating temperature is, for example, 50 to 200°C, and the drying time is, for example, approximately 10 seconds to 10 minutes.

Then, the inorganic material layer 11 is formed on the adhesion layer 4c.

The inorganic material layer 11 can be formed, for example, by vacuum deposition. The vacuum deposition may be physical vapor deposition or chemical vapor deposition. Examples of the physical vapor deposition include vacuum vapor deposition, sputtering vapor deposition, and ion plating. The physical vapor deposition is particularly preferably vacuum vapor deposition. Examples of the vacuum vapor deposition include resistance heating vacuum vapor deposition, electron beam (EB) heating vacuum vapor deposition, and induction heating vacuum vapor deposition. Examples of the chemical vapor deposition include thermal CVD, plasma CVD, and photo CVD.

Then, the gas barrier coating layer 12 is formed on the inorganic material layer 11.

The gas barrier coating layer 12 can be formed, for example, by applying a gas barrier coating layer forming composition onto the inorganic material layer 11, and curing the composition.

The application method of applying the gas barrier coating layer forming composition may be a known method. Specific examples of the application method include wet deposition methods such as gravure coating, dip coating, reverse coating, wire bar coating, and die coating.

The composition may be cured, for example, by heating or the like.

When the composition is cured by heating, the heating temperature and heating time may be set so that curing of a solid content and removal of a liquid such as an aqueous medium in the gas barrier coating layer forming composition can be simultaneously performed. The heating temperature may be set, for example, to 80 to 250°C, and the heating time may be set, for example, to 3 seconds to 10 minutes.

In this manner, the barrier film 100c is obtained.

<Packaging material according to the first aspect>

A packaging material according to the first aspect includes the barrier film 100a, and a sealant layer that is laminated on the barrier film, if necessary, via an adhesive layer, and the packaging material may include another layer in addition to these layers.

Fig. 3 is a schematic cross-sectional view of the packaging material according to the first aspect. A packaging material 200a shown in Fig. 3 has a structure in which a sealant layer 8a is laminated via an adhesive layer 7a on the surface of the barrier film 100b on which the protective layer 6 is located. A packaging material 200b shown in Fig. 4 has a structure in which a polyolefin layer (second substrate layer) 9a is laminated via an adhesive layer 7b on the surface of the barrier film facing away from the sealant layer 8a.

(Adhesive layers 7a and 7b)

The material of the adhesive layers 7a and 7b may be, for example, a polyester-isocyanate resin, a urethane resin, a polyether resin, or the like. From the viewpoint of achieving higher hotwater resistance, a two-component curing type urethane adhesive can be preferably used.

The thickness of the adhesive layers 7a and 7b is, for example, 1 to 10 μm, and preferably 2 to 6 μm.

(Sealant layer 8a)

The sealant layer 8a is a layer that is disposed on at least one outermost surface of the packaging material

and imparts heat sealability to the packaging material, and contains a polyolefin. The sealant layer 8a may be a polyolefin film containing a polyolefin as a main component. The term "main component" refers to a component contained at a content of greater than or equal to 50 mass% in the film. The content of polyolefin in the sealant layer may be, with respect to the total amount of the sealant layer, greater than or equal to 50 mass%, greater than or equal to 80 mass%, or 100 mass%. As the content of polyolefin in the sealant layer is increased, higher recyclability is achieved.

Examples of the polyolefin include polyethylene and polypropylene, and from the viewpoint of heat resistance, polypropylene is preferable. From the viewpoint of heat sealability, the polypropylene is preferably a copolymer or blend of propylene and $\alpha$-olefin. In particular, a propylene-ethylene random copolymer or a propylene-ethylene block copolymer is preferably used. Furthermore, the sealant layer 8a and the substrate layer 10a preferably contain the same type of polyolefin, and for example, when the substrate layer 10a contains homopolypropylene, the sealant layer 8a preferably also contains homopolypropylene.

The polyolefin film used for the sealant layer 8a may be a stretched film or an unstretched film, but is preferably an unstretched film from the viewpoint of allowing the sealant layer 8a to have a lower heat-sealing temperature than the substrate layer 10a to achieve good heat sealability. In such a case, the substrate layer 10a is preferably a stretched film.

The sealant layer 8a may contain, according to the purpose, known additives, for example, organic additives such as an antioxidant, a stabilizer, a lubricant such as calcium stearate, fatty acid amide, or erucic acid amide, and an antistatic agent, and a particulate lubricant such as particles of silica, zeolite, Syloid, hydrotalcite, or silicon.

The polyolefin resin such as homopolypropylene or a propylene copolymer used for the sealant layer 8a may be a recycled resin or a biomass-derived polyolefin.

The thickness of the sealant layer 8a is not specifically limited. The thickness of the sealant layer 8a may be 20 to 150 $\mu$m depending on the intended use, and from the viewpoint of environmental protection, the thickness of the sealant layer 8a may be 20 to 100 $\mu$m or 30 to 80 $\mu$m.

(Polyolefin layer 9a)

The polyolefin layer 9a serves as a substrate of the packaging material, as with the substrate layer 10a. The packaging material including the polyolefin layer 9a can have higher strength. The polyolefin layer 9a may be a polyolefin film containing a polyolefin as a main component. The polyolefin may be the same type of polyolefin as that of the sealant layer 8a, and from the viewpoint of environmental protection, the polyolefin is preferably a biomass-derived polyolefin.

Another layer such as a printing layer may be provided on the surface of the polyolefin layer 9a facing away from the substrate layer.

The thickness of the polyolefin layer 9a is not specifically limited. The thickness of the polyolefin layer 9a may be 10 to 150 $\mu$m depending on the intended use, and from the viewpoint of environmental protection, the thickness of the polyolefin layer 9a may be 15 to 100 $\mu$m or 20 to 60 $\mu$m.

The thickness of the entire packaging material is not specifically limited. The thickness of the packaging material may be 50 to 250 $\mu$m depending on the intended use, and may be 60 to 200 $\mu$m or 70 to 150 $\mu$m.

The barrier film and the packaging material of the present embodiment can be preferably used for a pillow bag, a standing pouch, a three-side seal bag, a four-side seal bag, and the like. Furthermore, the barrier film and the packaging material of the present embodiment can also be used for a packaging product subjected to boiling treatment, retort treatment, or the like.

<Packaging material according to the second aspect>

A packaging material according to the second aspect includes a substrate layer, a printing layer, and a sealant layer, and may include another layer in addition to these layers.

Fig. 5 is a schematic cross-sectional view of the packaging material according to the second aspect. A packaging material 200c shown in Fig. 5 includes a substrate layer 10b including a biomass-derived polyolefin layer 1b and a fossil fuel-derived polyolefin layer 2b, a printing layer 3, and a sealant layer 8b. The layers constituting the packaging material will be described below.

(Substrate layer 10b)

The substrate layer 10b, the biomass-derived polyolefin layer 1b, and the fossil fuel-derived polyolefin layer 2b may be the same as the substrate layer 10a, the biomass-derived polyolefin layer 1a, and the fossil fuel-derived polyolefin layer 2a, respectively. Differences of the substrate layer 10b from the substrate layer 10a will be described below.

The substrate layer 10b may be, for example, a laminate that is obtained by multilayer extrusion of a material constituting the biomass-derived polyolefin layer 1b and a material constituting the fossil fuel-derived polyolefin layer 2b

and thus includes the fossil fuel-derived polyolefin layer 2b as an outermost layer of the substrate layer 10b facing the printing layer 3. The substrate layer 10b including the fossil fuel-derived polyolefin layer 2b as an outermost layer of the substrate layer 10b facing the printing layer 3 achieves higher adhesion between the substrate layer 10b and the printing layer 3. When one or both of the material constituting the biomass-derived polyolefin layer 1b and the material constituting the fossil fuel-derived polyolefin layer 2b contain fossil fuel-derived polypropylene, the layers of the substrate layer can be easily laminated by multilayer extrusion.

(Printing layer 3)

The printing layer 3 is provided at a position at which the printing layer 3 is visible from the outside of the packaging material, for the purpose of displaying information on the contents, identifying the contents, or achieving higher designability of a packaging bag. The printing method and printing ink are not specifically limited, and are appropriately selected from known printing methods and printing inks, considering printability on a film, designability such as a color tone, adhesion, safety as a food container, and the like. The printing method may be, for example, gravure printing, offset printing, gravure offset printing, flexographic printing, inkjet printing, or the like. Of these, gravure printing can be preferably used from the viewpoint of productivity and high pattern definition.

(Sealant layer 8b)

The sealant layer 8b may be the same as the sealant layer 8a.

(Surface treatment)

In order to enhance the adhesion between the substrate layer 10b and the printing layer 3, the surface of the substrate layer 10b facing the printing layer 3 may be subjected to surface treatment such as plasma treatment or corona treatment. Such surface treatment improves performance such as adhesion and barrier performance.

The packaging material according to the second aspect may include another layer in addition to the substrate layer 10b, the printing layer 3, and the sealant layer 8b. Fig. 6 is a schematic cross-sectional view of a packaging material according to an embodiment, and the packaging material has a structure in which an adhesion layer 4b is provided between the substrate layer 10b and the printing layer 3 and a polyolefin layer 9b (second substrate layer) is laminated via an adhesive layer 7c on the surface of the printing layer 3 facing away from the substrate layer 10b. Furthermore, in the structure, the sealant layer 8b is laminated via an adhesive layer 7d on the surface of the substrate layer 10b facing away from the printing layer 3.

(Adhesion layer 4b)

The adhesion layer 4b may be provided on the surface of the substrate layer 10b on which the printing layer 3 is laminated. The adhesion layer 4b can provide effects such as higher adhesion performance between the substrate layer 10b and the printing layer 3, higher smoothness of the surface of the substrate layer 10b, adjustment of gloss, and prevention of cracking of the printing layer 3 caused by stretching of the substrate layer 10b. The adhesion layer 4b can be formed using an adhesion layer forming composition (anchor coating agent).

A resin used for the anchor coating agent may be the same as the resin used for the adhesion layer 4a.

The thickness of the adhesion layer 4b is not specifically limited, but is preferably in the range of 0.01 to 5 $\mu$m, more preferably in the range of 0.05 to 3 $\mu$m, and particularly preferably in the range of 0.1 to 2 $\mu$m. The adhesion layer 4 having a thickness of greater than or equal to the lower limit tends to provide more sufficient interlayer adhesion strength, and the adhesion layer 4 having a thickness of less than or equal to the upper limit tends to be more likely to achieve desired gas barrier performance.

The method of coating the adhesion layer 4b on the substrate layer 10b may be the same as the method of coating the adhesion layer 4a on the substrate layer 10a.

(Adhesive layers 7c and 7d)

The adhesive layers 7c and 7d may be the same as the adhesive layers 7a and 7b.

(Polyolefin layer 9b)

The polyolefin layer 9b serves as a substrate of the packaging material, as with the substrate layer 10b. The packaging material including the polyolefin layer 9b can have higher strength. The polyolefin layer 9b may be a polyolefin

film containing a polyolefin as a main component. The polyolefin may be the same type of polyolefin as that of the sealant layer 8b, and from the viewpoint of environmental protection, the polyolefin is preferably a biomass-derived polyolefin.

The polyolefin layer 9b may be disposed on the surface of the substrate layer 10b facing away from the printing layer 3, or may be disposed on the surface of the printing layer 3 facing away from the substrate layer 10b.

The thickness of the polyolefin layer 9b is not specifically limited. The thickness of the polyolefin layer 9b may be 10 to 150 μm depending on the intended use, and from the viewpoint of environmental protection, the thickness of the polyolefin layer 9b may be 15 to 100 μm or 20 to 80 μm.

The thickness of the entire packaging material is not specifically limited. The thickness of the packaging material may be 50 to 250 μm depending on the intended use, and may be 60 to 200 μm or 70 to 150 μm.

The packaging material of the present embodiment can be preferably used for a pillow bag, a standing pouch, a three-side seal bag, a four-side seal bag, and the like. Furthermore, the packaging material of the present embodiment can also be used for a packaging product subjected to boiling treatment, retort treatment or the like.

<Packaging material according to the third aspect >

Next, an embodiment of a packaging material according to the third aspect will be described with reference to Fig. 8. In Fig. 8, the same components as in Fig. 7 are denoted by the same reference signs, and redundant description is omitted.

Fig. 8 is a cross-sectional view of an embodiment of the packaging material according to the third aspect. As shown in Fig. 8, a packaging material 200e includes the barrier film 100c, and a sealant layer 8c that is provided on the side of the barrier film 100c on which the inorganic material layer 11 is located. As shown in Fig. 8, in the barrier film 100c, the gas barrier coating layer 12 may be adhered to the sealant layer 8c by an adhesive layer 7e.

The packaging material 200e includes the barrier film 100c, and thus can prevent deterioration in barrier performance while having a lower environmental load.

The material of the adhesive layer 7e may be, for example, a polyester-isocyanate resin, a urethane resin, a polyether resin, or the like.

(Sealant layer 8c)

The material of the sealant layer 8c may be a thermoplastic resin such as a polyolefin resin or a polyester resin, but a polyolefin resin is commonly used. Specifically, the polyolefin resin may be an ethylene resin such as a low-density polyethylene resin (LDPE), a medium-density polyethylene resin (MDPE), a linear low-density polyethylene resin (LLDPE), an ethylene-vinyl acetate copolymer (EVA), an ethylene-α-olefin copolymer, or an ethylene-(meth)acrylic acid copolymer; a polypropylene resin such as a homopolypropylene resin (PP), a propylene-ethylene random copolymer, a propylene-ethylene block copolymer, or a propylene-α-olefin copolymer; or a mixture thereof. The material of the sealant layer 8c can be appropriately selected from the above thermoplastic resins according to the intended use.

The thermoplastic resin constituting the sealant layer 8c may be stretched or unstretched, but from the viewpoint of ease of heat sealing due to a lower melting point, the thermoplastic resin is preferably unstretched.

The thickness of the sealant layer 8c is appropriately determined according to the mass of the contents, the shape of a packaging bag, and the like and is not specifically limited, but from the viewpoint of flexibility and adhesion of the packaging material 200e, the thickness of the sealant layer 8c is preferably 30 to 150 μm.

<Packaging product>

Next, an embodiment of a packaging product of the present disclosure will be described with reference to Fig. 9. Fig. 9 is a side view of an embodiment of the packaging product of the present disclosure. In Fig. 9, the same components as in Fig. 7 or 8 are denoted by the same reference signs, and redundant description is omitted.

As shown in Fig. 9, a packaging product 400 includes a packaging container 300, and contents C that are enclosed in the packaging container 300. The packaging container 300 shown in Fig. 9 is obtained by preparing a pair of packaging materials 200e, and heat sealing peripheral edge portions of the packaging materials 200e while the sealant layers 8c face each other. In Fig. 9, the adhesive layers 7e of the packaging materials 200e are omitted.

The packaging product 400 includes the packaging container 300, and the packaging container 300 includes the packaging materials 200e, thus preventing deterioration in barrier performance while having a lower environmental load. Therefore, the packaging product of the present disclosure can prevent deterioration in quality of the contents for a long period.

The packaging container 300 can also be obtained by bending a single packaging material 200e, and heat sealing a peripheral edge portion of the packaging material 200e while portions of the sealant layer 8c face each other.

The packaging container 300 may be a packaging bag, a laminated tube container, or a paper container for

liquids.

The contents C are not specifically limited, and examples of the contents C include food products, liquids, pharmaceutical products, and electronic components.

The present disclosure is not limited to the above embodiment. For example, in the above embodiment, in the packaging materials 200e, the sealant layer 8c is disposed on the side of the barrier film 100c on which the gas barrier coating layer 12 of the substrate layer 1c is located; however, the sealant layer 8c may be disposed on the side of the barrier film 100c opposite to the gas barrier coating layer 12 of the substrate layer 1c.

In the above embodiment, the barrier film 100c includes the gas barrier coating layer 12; however, the barrier film 100c may not necessarily include the gas barrier coating layer 12.

[Examples]

The present disclosure will be more specifically described by way of examples. However, the present disclosure is not be limited to the following examples.

The following materials were used as materials for the substrate layer.

- · PE ... Fossil fuel-derived polyethylene (MFR: 7 g/10 minutes, density: 0.91 g/cm$^3$, melting point: 106°C, manufactured by Japan Polyethylene Corporation)
- · PP ... Fossil fuel-derived homopolypropylene (MFR: 3 g/10 minutes, density: 0.90 g/cm$^3$, melting point: 157°C, manufactured by Prime Polymer Co., Ltd.)
- · Bio-PE ... Biomass-derived polyethylene (MFR: 2.3 g/10 minutes, density: 0.92 g/cm$^3$, melting point: 126°C, biomass content: 84%, manufactured by Braskem)

The following materials were used for the adhesion layer.

- · A1 ... Combination of acrylic polyol, isocyanate, and silane coupling agent
- · A2 ... Combination of polyester polyol and isocyanate
- · A3 ... Neutral color ink (trade name: NR medium, manufactured by Toyo Ink Co., Ltd.)

The following materials were used for the protective layer.

- · B1 ... Combination of polyacrylic acid, zinc oxide, dispersant, and silane coupling agent
- · B2 ... Combination of tetraethoxysilane, polyvinyl alcohol, and silane coupling agent
- · B3 ... Combination of tetraethoxysilane and polyvinyl alcohol

The following materials were used for the printing layer.

- · C1 ... Printing ink (trade name: LioGran R651 white, manufactured by Toyo Ink Co., Ltd.)
- · C2 ... Printing ink (trade name: LioGran R39 indigo, manufactured by Toyo Ink Co., Ltd.)

The following material was used for the adhesive layer.

· Polyurethane adhesive (trade name: A525/A52, manufactured by Mitsui Chemicals, Inc.)

The following material was used for the sealant layer.

· CPP ... Unstretched polypropylene film (thickness: 60 μm, density: 0.90 g/cm$^3$)

The following material was used for the polyolefin layer.

· OPP ... Biaxially stretched polypropylene film (thickness: 20 μm, density: 0.90 g/cm$^3$)

<Examples 1-1 to 1-7 and Comparative Examples 1-1 to 1-5>

(Example 1-1)

PP and bio-PE were mixed to prepare a mixed resin (hereinafter referred to as "bio-PP"), followed by multilayer extrusion of the obtained bio-PP and a mixture of PP and PE, thereby obtaining a substrate layer having a biomass content of 10% and including a biomass-derived polyolefin layer that was composed of bio-PP and had a thickness of 19 μm and a fossil fuel-derived polyolefin layer that was composed of a mixture of PP and PE and had a thickness of 1 μm. Before multilayer extrusion, an anti-blocking agent was added so that the resins constituting the layers of the substrate layer contained the anti-blocking agent. The surface of the obtained substrate layer on the fossil fuel-derived polyolefin layer side was corona-treated, and then an adhesion layer A1 was coated to have a thickness of 0.1 μm on

the treated surface by gravure coating. Then, a metal oxide layer of alumina ($Al_2O_3$) was formed on the adhesion layer A1 by vapor deposition, and a protective layer B1 was coated to have a thickness of 0.5 μm by gravure coating, thereby obtaining a barrier film. OPP was bonded via a polyurethane adhesive onto the protective layer of the obtained barrier film, and aged at 40°C. Furthermore, CPP was bonded via a polyurethane adhesive onto the surface of the substrate layer facing away from the OPP, and aged at 40°C, thereby obtaining a packaging material of Example 1-1 having a lamination structure including the CPP, the adhesive layer, the biomass-derived polyolefin layer, the fossil fuel-derived polyolefin layer (surface corona treatment), the adhesion layer, the metal oxide layer, the protective layer, the adhesive layer, and the OPP.

(Comparative Example 1-1)

A packaging material of Comparative Example 1-1 was obtained in the same manner as in Example 1-1 except that the substrate layer was composed of only a biomass-derived polyolefin layer having a thickness of 20 μm. The packaging material of Comparative Example 1-1 had a lamination structure including the CPP, the adhesive layer, the biomass-derived polyolefin layer (surface corona treatment), the adhesion layer, the metal oxide layer, the protective layer, the adhesive layer, and the OPP.

(Example 1-2)

Bio-PP was prepared with a different mixing ratio of PP and bio-PE so that the substrate layer had the following biomass content, followed by multilayer extrusion of the obtained bio-PP and a mixture of PP and PE, thereby obtaining a substrate layer having a biomass content of 7% and including a biomass-derived polyolefin layer that was composed of bio-PP and had a thickness of 19 μm and a fossil fuel-derived polyolefin layer that was composed of a mixture of PP and PE and had a thickness of 1 μm. Before multilayer extrusion, an anti-blocking agent was added so that the resins constituting the layers of the substrate layer contained the anti-blocking agent. The surface of the obtained substrate layer on the fossil fuel-derived polyolefin layer side was corona-treated, and then an adhesion layer A1 was coated to have a thickness of 0.1 μm on the treated surface by gravure coating. Then, a metal oxide layer of silica ($SiO_2$) was formed on the adhesion layer A1 by vapor deposition, and a protective layer B2 was coated to have a thickness of 0.25 μm by gravure coating, thereby obtaining a barrier film. CPP was bonded via a polyurethane adhesive onto the protective layer of the obtained barrier film, and aged at 40°C, thereby obtaining a packaging material of Example 1-2 having a lamination structure including the biomass-derived polyolefin layer, the fossil fuel-derived polyolefin layer (surface corona treatment), the adhesion layer, the metal oxide layer, the protective layer, the adhesive layer, and the CPP.

(Comparative Example 1-2)

A packaging material of Comparative Example 1-2 was obtained in the same manner as in Example 1-2 except that the substrate layer was composed of only a biomass-derived polyolefin layer having a thickness of 20 μm. The packaging material of Comparative Example 1-2 had a lamination structure including the biomass-derived polyolefin layer (surface corona treatment), the adhesion layer, the metal oxide layer, the protective layer, the adhesive layer, and the CPP.

(Example 1-3)

Bio-PP was prepared with a different mixing ratio of PP and bio-PE so that the substrate layer had the following biomass content, followed by multilayer extrusion of the obtained bio-PP and a mixture of PP and PE, thereby obtaining a substrate layer having a biomass content of 40% and including a biomass-derived polyolefin layer that was composed of bio-PP and had a thickness of 19 μm and a fossil fuel-derived polyolefin layer that was composed of a mixture of PP and PE and had a thickness of 1 μm. Before multilayer extrusion, an anti-blocking agent was added so that the resins constituting the layers of the substrate layer contained the anti-blocking agent. The surface of the obtained substrate layer on the fossil fuel-derived polyolefin layer side was corona-treated, and then an adhesion layer A1 was coated to have a thickness of 0.1 μm on the treated surface by gravure coating. Then, a metal oxide layer of silica ($SiO_2$) was formed on the adhesion layer A1 by vapor deposition, and a protective layer B3 was coated to have a thickness of 0.3 μm by gravure coating, thereby obtaining a barrier film. CPP was bonded via a polyurethane adhesive onto the protective layer of the obtained barrier film, and aged at 40°C, thereby obtaining a packaging material of Example 1-3 having a lamination structure including the biomass-derived polyolefin layer, the fossil fuel-derived polyolefin layer (surface corona treatment), the adhesion layer, the metal oxide layer, the protective layer, the adhesive layer, and the CPP.

(Comparative Example 1-3)

A packaging material of Comparative Example 1-3 was obtained in the same manner as in Example 1-3 except that the substrate layer was composed of only a biomass-derived polyolefin layer having a thickness of 20 μm. The packaging material of Comparative Example 1-3 had a lamination structure including the biomass-derived polyolefin layer (surface corona treatment), the adhesion layer, the metal oxide layer, the protective layer, the adhesive layer, and the CPP.

(Example 1-4)

Bio-PP was prepared with a different mixing ratio of PP and bio-PE so that the substrate layer had the following biomass content, followed by multilayer extrusion of the obtained bio-PP and a mixture of PP and PE, thereby obtaining a substrate layer having a biomass content of 10% and including a biomass-derived polyolefin layer that was composed of bio-PP and had a thickness of 19 μm and a fossil fuel-derived polyolefin layer that was composed of a mixture of PP and PE and had a thickness of 1 μm. Before multilayer extrusion, an anti-blocking agent was added so that the resins constituting the layers of the substrate layer contained the anti-blocking agent. The surface of the obtained substrate layer on the fossil fuel-derived polyolefin layer side was plasma-treated, and then an adhesion layer A2 was coated to have a thickness of 0.05 μm on the treated surface by gravure coating. Then, a metal oxide layer of alumina ($Al_2O_3$) was formed on the adhesion layer A2 by vapor deposition, and a protective layer B3 was coated to have a thickness of 0.3 μm by gravure coating, thereby obtaining a barrier film. CPP was bonded via a polyurethane adhesive onto the protective layer of the obtained barrier film, and aged at 40°C, thereby obtaining a packaging material of Example 1-4 having a lamination structure including the biomass-derived polyolefin layer, the fossil fuel-derived polyolefin layer (surface plasma treatment), the adhesion layer, the metal oxide layer, the protective layer, the adhesive layer, and the CPP.

(Comparative Example 1-4)

A packaging material of Comparative Example 1-4 was obtained in the same manner as in Example 1-4 except that the substrate layer was composed of only a biomass-derived polyolefin layer having a thickness of 20 μm. The packaging material of Comparative Example 1-4 had a lamination structure including the biomass-derived polyolefin layer (surface plasma treatment), the adhesion layer, the metal oxide layer, the protective layer, the adhesive layer, and the CPP.

(Example 1-5)

Bio-PP was prepared with a different mixing ratio of PP and bio-PE so that the substrate layer had the following biomass content, followed by multilayer extrusion of the obtained bio-PP and a mixture of PP and PE, thereby obtaining a substrate layer having a biomass content of 10% and including a biomass-derived polyolefin layer that was composed of bio-PP and had a thickness of 19 μm and a fossil fuel-derived polyolefin layer that was composed of a mixture of PP and PE and had a thickness of 1 μm. Before multilayer extrusion, an anti-blocking agent was added so that the resins constituting the layers of the substrate layer contained the anti-blocking agent. The surface of the obtained substrate layer on the fossil fuel-derived polyolefin layer side was plasma-treated, and then a metal oxide layer of alumina ($Al_2O_3$) was formed on the treated surface by vapor deposition, and a protective layer B 1 was coated to have a thickness of 0.5 μm by gravure coating, thereby obtaining a barrier film. CPP was bonded via a polyurethane adhesive onto the protective layer of the obtained barrier film, and aged at 40°C, thereby obtaining a packaging material of Example 1-5 having a lamination structure including the biomass-derived polyolefin layer, the fossil fuel-derived polyolefin layer (surface plasma treatment), the metal oxide layer, the protective layer, the adhesive layer, and the CPP.

(Comparative Example 1-5)

A packaging material of Comparative Example 1-5 was obtained in the same manner as in Example 1-5 except that the substrate layer was composed of only a biomass-derived polyolefin layer having a thickness of 20 μm. The packaging material of Comparative Example 1-5 had a lamination structure including the biomass-derived polyolefin layer (surface plasma treatment), the metal oxide layer, the protective layer, the adhesive layer, and the CPP.

(Example 1-6)

Bio-PP was prepared with a different mixing ratio of PP and bio-PE so that the substrate layer had the following biomass content, followed by multilayer extrusion of the obtained bio-PP and PP, thereby obtaining a substrate layer

having a biomass content of 7% and including a biomass-derived polyolefin layer that was composed of bio-PP and had a thickness of 19 μm and a fossil fuel-derived polyolefin layer that was composed of PP and had a thickness of 1 μm. Before multilayer extrusion, an anti-blocking agent was added so that the resins constituting the layers of the substrate layer contained the anti-blocking agent. The surface of the obtained substrate layer on the fossil fuel-derived polyolefin layer side was corona-treated, and then an adhesion layer A1 was coated to have a thickness of 0. 1 μm on the treated surface by gravure coating. Then, a metal oxide layer of silica ($SiO_2$) was formed on the adhesion layer A1 by vapor deposition, and a protective layer B2 was coated to have a thickness of 0.25 μm by gravure coating, thereby obtaining a barrier film. CPP was bonded via a polyurethane adhesive onto the protective layer of the obtained barrier film, and aged at 40°C, thereby obtaining a packaging material of Example 1-6 having a lamination structure including the biomass-derived polyolefin layer, the fossil fuel-derived polyolefin layer (surface corona treatment), the adhesion layer, the metal oxide layer, the protective layer, the adhesive layer, and the CPP.

(Example 1-7)

A packaging material of Example 1-7 was obtained in the same manner as in Example 1-6 except that multilayer extrusion of bio-PE and PP was performed to obtain a substrate layer having a biomass content of 7% and including a biomass-derived polyolefin layer that was composed of bio-PE and had a thickness of 19 μm and a fossil fuel-derived polyolefin layer that was composed of PP and had a thickness of 1 μm. The packaging material of Example 1-7 had a lamination structure including the biomass-derived polyolefin layer, the fossil fuel-derived polyolefin layer (surface corona treatment), the adhesion layer, the metal oxide layer, the protective layer, the adhesive layer, and the CPP.

<Measurement of lamination strength>

A sample having a width of 15 mm and a length of 100 mm was cut out from each of the packaging materials according to the examples and the comparative examples. The lamination strength of the samples was measured in a room temperature (25°C) environment at a peeling rate of 300 mm/min and a peeling angle of 180 degrees in accordance with JIS K 6854-2. The measurement results are shown in Table 1. In Examples 1-1 to 1-7, the peeled surface was in the adhesive layer between the protective layer and the sealant layer. In Comparative Examples 1-1 to 1-4, the peeled surface was in the adhesion layer between the fossil fuel-derived polyolefin layer and the metal oxide layer, and in Comparative Example 1-5, the peeled surface was the interface between the fossil fuel-derived polyolefin layer and the adhesion layer.

[Table 1]

| | Substrate layer | Surface treatment | Adhesion layer | Metal oxide layer | Protective layer | Biomass content (%) | Laminati on strength (N/ 15 mm) |
|---|---|---|---|---|---|---|---|
| Ex. 1-1 | Bio-PP /PP + PE | Corona treatment | A1 | $Al_2O_3$ | B1 | 10 | 4.5 |
| Ex. 1-2 | Bio-PP/PP + PE | Corona treatment | A1 | $SiO_2$ | B2 | 7 | 4.0 |
| Ex. 1-3 | Bio-PP /PP + PE | Corona treatment | A1 | $SiO_2$ | B3 | 40 | 4.0 |
| Ex. 1-4 | Bio-PP /PP + PE | Plasma treatment | A2 | $Al_2O_3$ | B3 | 10 | 4.0 |
| Ex. 1-5 | Bio-PP /PP + PE | Plasma treatment | - | $Al_2O_3$ | B1 | 10 | 3.3 |
| Ex. 1-6 | Bio-PP /PP | Corona treatment | A1 | $SiO_2$ | B2 | 7 | 2.0 |
| Ex. 1-7 | Bio-PE /PP | Corona treatment | A1 | $SiO_2$ | B2 | 7 | 2.0 |
| Comp. Ex. 1-1 | Bio-PP | Corona treatment | A1 | $Al_2O_3$ | B1 | 11 | 1.0 |

(continued)

| | Substrate layer | Surface treatment | Adhesion layer | Metal oxide layer | Protective layer | Biomass content (%) | Laminati on strength (N/ 15 mm) |
|---|---|---|---|---|---|---|---|
| Comp. Ex. 1-2 | Bio-PP | Corona treatment | A1 | $SiO_2$ | B2 | 7 | 1.2 |
| Comp. Ex. 1-3 | Bio-PP | Corona treatment | A1 | $SiO_2$ | B3 | 42 | 0.8 |
| Comp. Ex. 1-4 | Bio-PP | Plasma treatment | A2 | $Al_2O_3$ | B3 | 11 | 1.0 |
| Comp. Ex. 1-5 | Bio-PP | Plasma treatment | - | $Al_2O_3$ | B1 | 11 | 0.8 |

<Examples 2-1 to 2-8 and Comparative Examples 2-1 to 2-4>

(Example 2-1)

PP and bio-PE were mixed to prepare a mixed resin (hereinafter referred to as "bio-PP"), followed by multilayer extrusion of the obtained bio-PP and a mixture of PP and PE, thereby obtaining a substrate layer having a biomass content of 10% and including a biomass-derived polyolefin layer that was composed of bio-PP and had a thickness of 19 μm and a fossil fuel-derived polyolefin layer that was composed of a mixture of PP and PE and had a thickness of 1 μm. Before multilayer extrusion, an anti-blocking agent was added so that the resins constituting the layers of the substrate layer contained the anti-blocking agent. The surface of the obtained substrate layer on the fossil fuel-derived polyolefin layer side was corona-treated, and then an adhesion layer A3 was coated to have a thickness of 0.3 μm on the treated surface by gravure coating. Then, a printing layer C1 was coated to have a thickness of 0.3 μm on the adhesion layer A3 by gravure coating. OPP was bonded via a polyurethane adhesive onto the obtained printing layer, and aged at 40°C. Furthermore, CPP was bonded via a polyurethane adhesive onto the surface of the substrate layer facing away from the OPP, and aged at 40°C, thereby obtaining a packaging material of Example 2-1 having a lamination structure including the CPP, the adhesive layer, the biomass-derived polyolefin layer, the fossil fuel-derived polyolefin layer (surface corona treatment), the adhesion layer, the printing layer, the adhesive layer, and the OPP.

(Comparative Example 2-1)

A packaging material of Comparative Example 2-1 was obtained in the same manner as in Example 2-1 except that the substrate layer was composed of only a biomass-derived polyolefin layer having a thickness of 20 μm. The packaging material of Comparative Example 2-1 had a lamination structure including the CPP, the adhesive layer, the biomass-derived polyolefin layer (surface corona treatment), the adhesion layer, the printing layer, the adhesive layer, and the OPP.

(Example 2-2)

Bio-PP was prepared with a different mixing ratio of PP and bio-PE so that the substrate layer had the following biomass content, followed by multilayer extrusion of the obtained bio-PP and a mixture of PP and PE, thereby obtaining a substrate layer having a biomass content of 7% and including a biomass-derived polyolefin layer that was composed of bio-PP and had a thickness of 19 μm and a fossil fuel-derived polyolefin layer that was composed of a mixture of PP and PE and had a thickness of 1 μm. Before multilayer extrusion, an anti-blocking agent was added so that the resins constituting the layers of the substrate layer contained the anti-blocking agent. The surface of the obtained substrate layer on the fossil fuel-derived polyolefin layer side was corona-treated, and then an adhesion layer A3 was coated to have a thickness of 0.3 μm on the treated surface by gravure coating. Then, a printing layer C2 was coated to have a thickness of 0.3 μm on the adhesion layer A3 by gravure coating. OPP was bonded via a polyurethane adhesive onto the obtained printing layer, and aged at 40°C. Furthermore, the CPP was bonded via a polyurethane adhesive onto the obtained OPP, and aged at 40°C, thereby obtaining a packaging material of Example 2-2 having a lamination structure including the biomass-derived polyolefin layer, the fossil fuel-derived polyolefin layer (surface corona treatment), the adhesion layer, the printing layer, the adhesive layer, the OPP, the adhesive layer, and the CPP.

(Comparative Example 2-2)

A packaging material of Comparative Example 2-2 was obtained in the same manner as in Example 2-2 except that the substrate layer was composed of only a biomass-derived polyolefin layer having a thickness of 20 μm. The packaging material of Comparative Example 2-2 had a lamination structure including the biomass-derived polyolefin layer (surface corona treatment), the adhesion layer, the printing layer, the adhesive layer, the OPP, the adhesive layer, and the CPP.

(Example 2-3)

Bio-PP was prepared with a different mixing ratio of PP and bio-PE so that the substrate layer had the following biomass content, followed by multilayer extrusion of the obtained bio-PP and a mixture of PP and PE, thereby obtaining a substrate layer having a biomass content of 40% and including a biomass-derived polyolefin layer that was composed of bio-PP and had a thickness of 19 μm and a fossil fuel-derived polyolefin layer that was composed of a mixture of PP and PE and had a thickness of 1 μm. Before multilayer extrusion, an anti-blocking agent was added so that the resins constituting the layers of the substrate layer contained the anti-blocking agent. The surface of the obtained substrate layer on the fossil fuel-derived polyolefin layer side was corona-treated, and then a printing layer C1 was coated to have a thickness of 0.3 μm on the treated surface by gravure coating. CPP was bonded via a polyurethane adhesive onto the obtained printing layer, and aged at 40°C, thereby obtaining a packaging material of Example 2-3 having a lamination structure including the biomass-derived polyolefin layer, the fossil fuel-derived polyolefin layer (surface corona treatment), the printing layer, the adhesive layer, and the CPP.

(Comparative Example 2-3)

A packaging material of Comparative Example 2-3 was obtained in the same manner as in Example 2-3 except that the substrate layer was composed of only a biomass-derived polyolefin layer having a thickness of 20 μm. The packaging material of Comparative Example 2-3 had a lamination structure including the biomass-derived polyolefin layer (surface corona treatment), the printing layer, the adhesive layer, and the CPP.

(Example 2-4)

Bio-PP was prepared with a different mixing ratio of PP and bio-PE so that the substrate layer had the following biomass content, followed by multilayer extrusion of the obtained bio-PP and a mixture of PP and PE, thereby obtaining a substrate layer having a biomass content of 10% and including a biomass-derived polyolefin layer that was composed of bio-PP and had a thickness of 19 μm and a fossil fuel-derived polyolefin layer that was composed of a mixture of PP and PE and had a thickness of 1 μm. Before multilayer extrusion, an anti-blocking agent was added so that the resins constituting the layers of the substrate layer contained the anti-blocking agent. The surface of the obtained substrate layer on the fossil fuel-derived polyolefin layer side was plasma-treated, and then a printing layer C2 was coated to have a thickness of 0.3 μm on the treated surface by gravure coating. CPP was bonded via a polyurethane adhesive onto the obtained printing layer, and aged at 40°C, thereby obtaining a packaging material of Example 2-4 having a lamination structure including the biomass-derived polyolefin layer, the fossil fuel-derived polyolefin layer (surface plasma treatment), the printing layer, the adhesive layer, and the CPP.

(Comparative Example 2-4)

A packaging material of Comparative Example 2-4 was obtained in the same manner as in Example 2-4 except that the substrate layer was composed of only a biomass-derived polyolefin layer having a thickness of 20 μm. The packaging material of Comparative Example 2-4 had a lamination structure including the biomass-derived polyolefin layer (surface plasma treatment), the printing layer, the adhesive layer, and the CPP.

(Example 2-5)

Bio-PP was prepared with a different mixing ratio of PP and bio-PE so that the substrate layer had the following biomass content, followed by multilayer extrusion of the obtained bio-PP and PP, thereby obtaining a substrate layer having a biomass content of 10% and including a biomass-derived polyolefin layer that was composed of bio-PP and had a thickness of 19 μm and a fossil fuel-derived polyolefin layer that was composed of PP and had a thickness of 1 μm. Before multilayer extrusion, an anti-blocking agent was added so that the resins constituting the layers of the substrate layer contained the anti-blocking agent. The surface of the obtained substrate layer on the fossil fuel-derived

polyolefin layer side was corona-treated, and then an adhesion layer A3 was coated to have a thickness of 0.3 μm on the treated surface by gravure coating. Then, a printing layer C1 was coated to have a thickness of 0.3 μm on the adhesion layer A3 by gravure coating. CPP was bonded via a polyurethane adhesive onto the obtained printing layer, and aged at 40°C, thereby obtaining a packaging material of Example 2-5 having a lamination structure including the biomass-derived polyolefin layer, the fossil fuel-derived polyolefin layer (surface corona treatment), the adhesion layer, the printing layer, the adhesive layer, and the CPP.

(Example 2-6)

A packaging material of Example 2-6 was obtained in the same manner as in Example 2-5 except that multilayer extrusion of bio-PE and PP was performed to obtain a substrate layer having a biomass content of 10% and including a biomass-derived polyolefin layer that was composed of bio-PE and had a thickness of 19 μm and a fossil fuel-derived polyolefin layer that was composed of PP and had a thickness of 1 μm. The packaging material of Example 2-6 had a lamination structure including the biomass-derived polyolefin layer, the fossil fuel-derived polyolefin layer (surface corona treatment), the adhesion layer, the printing layer, the adhesive layer, and the CPP.

(Example 2-7)

Bio-PP was prepared with a different mixing ratio of PP and bio-PE so that the substrate layer had the following biomass content, followed by multilayer extrusion of the obtained bio-PP and PP, thereby obtaining a substrate layer having a biomass content of 10% and including a biomass-derived polyolefin layer that was composed of bio-PP and had a thickness of 19 μm and a fossil fuel-derived polyolefin layer that was composed of PP and had a thickness of 1 μm. Before multilayer extrusion, an anti-blocking agent was added so that the resins constituting the layers of the substrate layer contained the anti-blocking agent. The surface of the obtained substrate layer on the fossil fuel-derived polyolefin layer side was corona-treated, and then a printing layer C1 was coated to have a thickness of 0.3 μm on the treated surface by gravure coating. CPP was bonded via a polyurethane adhesive onto the obtained printing layer, and aged at 40°C, thereby obtaining a packaging material of Example 2-7 having a lamination structure including the biomass-derived polyolefin layer, the fossil fuel-derived polyolefin layer (surface corona treatment), the printing layer, the adhesive layer, and the CPP.

(Example 2-8)

A packaging material of Example 2-8 was obtained in the same manner as in Example 2-7 except that multilayer extrusion of bio-PE and PP was performed to obtain a substrate layer having a biomass content of 10% and including a biomass-derived polyolefin layer that was composed of bio-PE and had a thickness of 19 μm and a fossil fuel-derived polyolefin layer that was composed of PP and had a thickness of 1 μm. The packaging material of Example 2-8 had a lamination structure including the biomass-derived polyolefin layer, the fossil fuel-derived polyolefin layer (surface corona treatment), the printing layer, the adhesive layer, and the CPP.

<Measurement of lamination strength>

A sample having a width of 15 mm and a length of 100 mm was cut out from each of the packaging materials according to the examples and the comparative examples. The lamination strength of the samples was measured in a room temperature (25°C) environment at a peeling rate of 300 mm/min and a peeling angle of 180 degrees in accordance with JIS K 6854-2. The measurement results are shown in Table 2.

[Table 2]

| | Substrate layer | Surface treatment | Adhesion layer | Printing layer | Biomass content (%) | Lamination strength (N/15 mm) |
|---|---|---|---|---|---|---|
| Ex. 2-1 | Bio-PP/PP+ PE | Corona treatment | A3 | C1 | 10 | 4.5 |
| Ex. 2-2 | Bio-PP/PP+ PE | Corona treatment | A3 | C2 | 7 | 4.0 |
| Ex. 2-3 | Bio-PP/PP+ PE | Corona treatment | - | C1 | 40 | 3.3 |

(continued)

| | Substrate layer | Surface treatment | Adhesion layer | Printing layer | Biomass content (%) | Lamination strength (N/15 mm) |
|---|---|---|---|---|---|---|
| Ex. 2-4 | Bio-PP/PP+ PE | Plasma treatment | - | C2 | 10 | 3.2 |
| Ex. 2-5 | Bio-PP /PP | Corona treatment | A3 | C1 | 10 | 4.5 |
| Ex. 2-6 | Bio-PE /PP | Corona treatment | A3 | C1 | 10 | 4.2 |
| Ex. 2-7 | Bio-PP /PP | Corona treatment | - | C1 | 10 | 3.5 |
| Ex. 2-8 | Bio-PE /PP | Corona treatment | - | C1 | 10 | 3.2 |
| Comp. Ex. 2-1 | Bio-PP | Corona treatment | A3 | C1 | 11 | 1.5 |
| Comp. Ex. 2-2 | Bio-PP | Corona treatment | A3 | C2 | 7 | 1.2 |
| Comp. Ex. 2-3 | Bio-PP | Corona treatment | - | C1 | 42 | 1.1 |
| Comp. Ex. 2-4 | Bio-PP | Plasma treatment | - | C2 | 11 | 1.1 |

[Reference Signs List]

1a, 1b ... Biomass-derived polyolefin layer
2a, 2b ... Fossil fuel-derived polyolefin layer
3 ... Printing layer
4a, 4b, 4c ... Adhesion layer
5 ... Metal oxide layer
6 ... Protective layer
7a, 7b, 7c, 7d, 7e ... Adhesive layer
8a, 8b, 8c ... Sealant layer
9a, 9b ... Polyolefin layer
10a, 10b, 10c ... Substrate layer
1 1 ... Inorganic material layer
12 ... Gas barrier coating layer
100a, 100b, 100c ... Barrier film
200a, 200b, 200c, 200d, 200e ... Packaging material
300 ... Packaging container
400 ... Packaging product

## Claims

**1.** A barrier film comprising:

a substrate layer; and
a metal oxide layer, wherein
the substrate layer includes a biomass-derived polyolefin layer containing a biomass-derived polyolefin and a fossil fuel-derived polyolefin layer containing no biomass-derived polyolefin,

the fossil fuel-derived polyolefin layer is an outermost layer of the substrate layer facing the metal oxide layer, and the substrate layer has a biomass content of greater than or equal to 5%.

**2.** The barrier film according to claim 1, wherein the fossil fuel-derived polyolefin layer contains fossil fuel-derived polypropylene and fossil fuel-derived polyethylene.

**3.** The barrier film according to claim 1 or 2, further comprising an adhesion layer that is disposed between the fossil fuel-derived polyolefin layer and the metal oxide layer.

**4.** The barrier film according to any one of claims 1 to 3, wherein a surface of the substrate layer facing the metal oxide layer is surface treated.

**5.** The barrier film according to any one of claims 1 to 4, further comprising a protective layer that is disposed on a surface of the metal oxide layer facing away from the substrate layer.

**6.** A packaging material comprising:

the barrier film according to any one of claims 1 to 5; and
a sealant layer, wherein
the sealant layer is at least one outermost surface layer of the packaging material.

**7.** The packaging material according to claim 6, further comprising a polyolefin layer that is disposed on a surface of the barrier film facing away from the sealant layer.

**8.** A packaging material comprising:

a substrate layer;
a printing layer; and
a sealant layer, wherein
the substrate layer includes a biomass-derived polyolefin layer containing a biomass-derived polyolefin, and a fossil fuel-derived polyolefin layer containing no biomass-derived polyolefin,
the fossil fuel-derived polyolefin layer is an outermost layer of the substrate layer facing the printing layer,
the sealant layer is at least one outermost surface layer of the packaging material, and
the substrate layer has a biomass content of greater than or equal to 5%.

**9.** The packaging material according to claim 8, wherein the fossil fuel-derived polyolefin layer contains fossil fuel-derived polypropylene and fossil fuel-derived polyethylene.

**10.** The packaging material according to claim 8 or 9, further comprising an adhesion layer that is disposed between the fossil fuel-derived polyolefin layer and the printing layer.

**11.** The packaging material according to any one of claims 8 to 10, wherein a surface of the substrate layer facing the printing layer is surface treated.

**12.** The packaging material according to any one of claims 8 to 11, further comprising a polyolefin layer.

**13.** A barrier film comprising:

a substrate layer; and
an inorganic material layer, wherein
the substrate layer is composed of a resin containing bio-polypropylene, and a resin composition containing inorganic particles.

**14.** The barrier film according to claim 13, wherein

at least the inorganic material layer is provided on the substrate layer,
the substrate layer is obtained by reacting a raw material containing bio-propylene in a presence of the inorganic particles, and

the inorganic particles contain at least a metal or a metal oxide.

**15.** The barrier film according to claim 13, wherein the inorganic particles contain a metal oxide.

**16.** The barrier film according to claim 15, wherein the metal oxide is zeolite.

**17.** The barrier film according to any one of claims 13 to 16, wherein the substrate layer has a biomass content of greater than or equal to 50%.

**18.** The barrier film according to any one of claims 13 to 17, further comprising an adhesion layer between the substrate layer and the inorganic material layer, wherein
the adhesion layer contains an organic material.

**19.** The barrier film according to any one of claims 13 to 18, further comprising a gas barrier coating layer that coats the inorganic material layer, wherein
the gas barrier coating layer contains Si and C.

**20.** A packaging material comprising:

the barrier film according to any one of claims 13 to 19; and
a sealant layer that is provided on a side of the barrier film on which the inorganic material layer is located.

**21.** A packaging container comprising the packaging material according to claim 20.

**22.** A packaging product comprising:

the packaging container according to claim 21; and
contents that are enclosed in the packaging container.

FIG.1

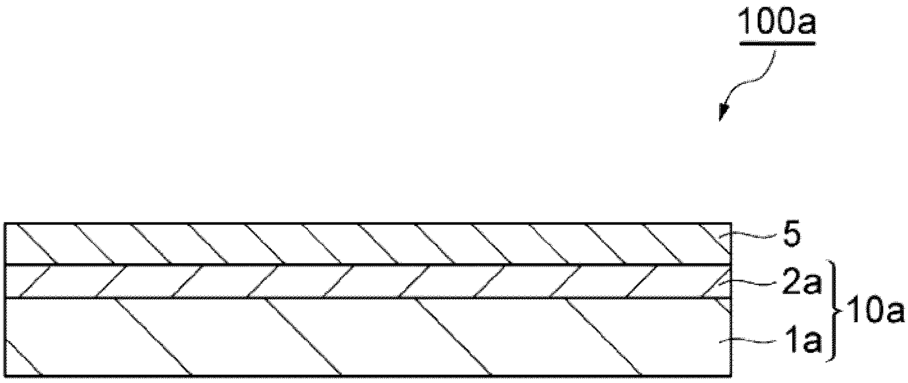

FIG.2

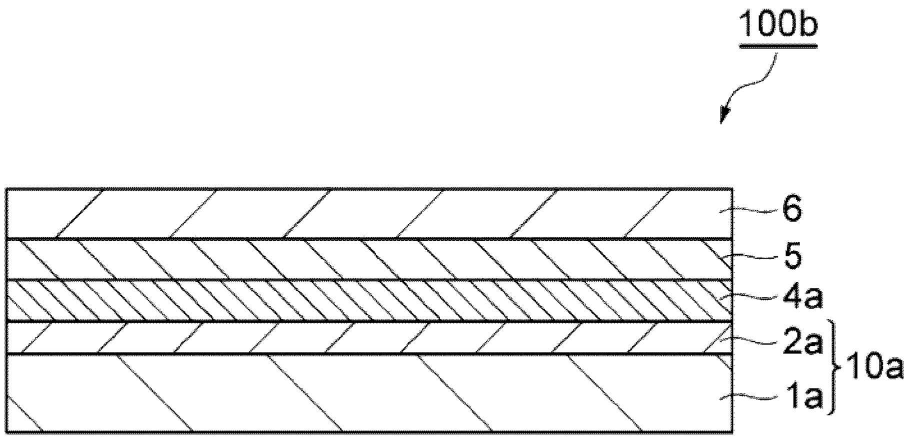

FIG.3

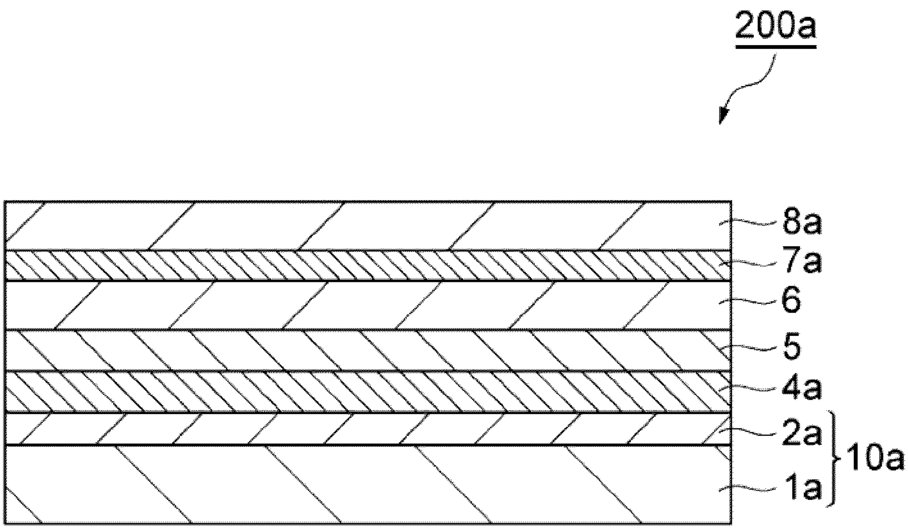

FIG.4

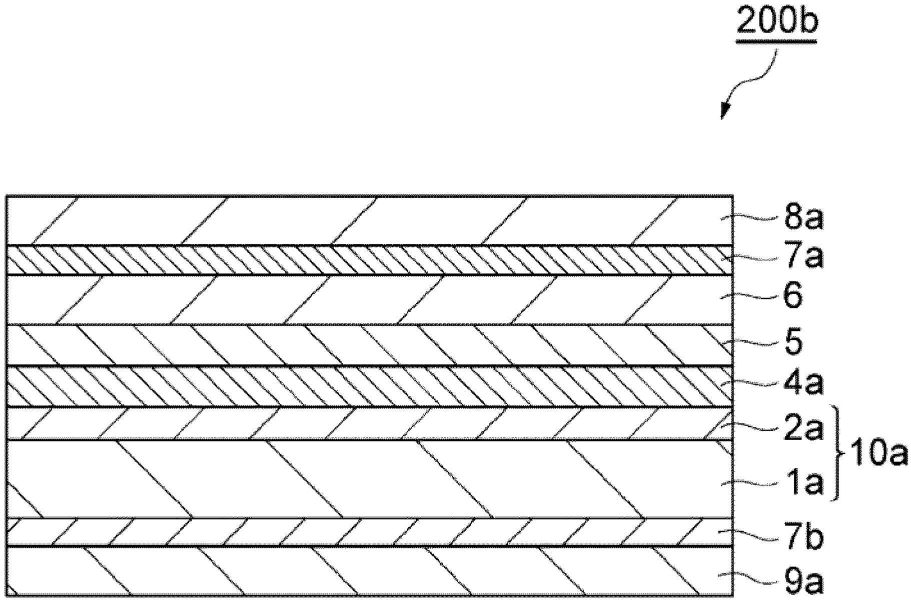

FIG.5

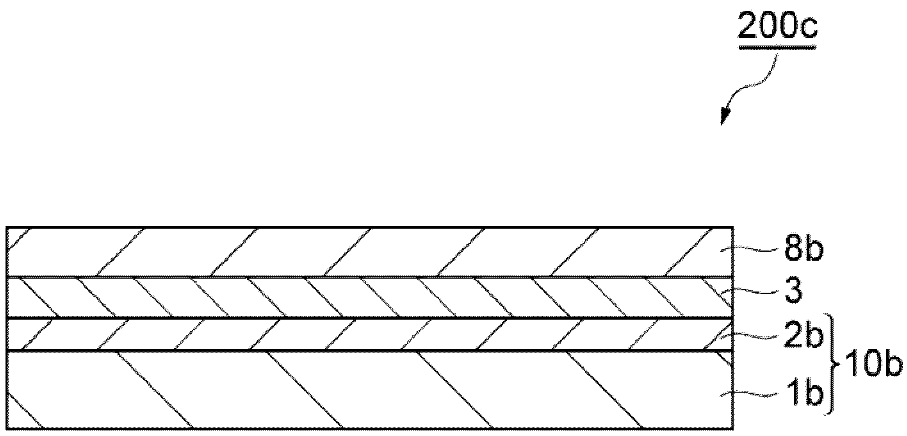

FIG.6

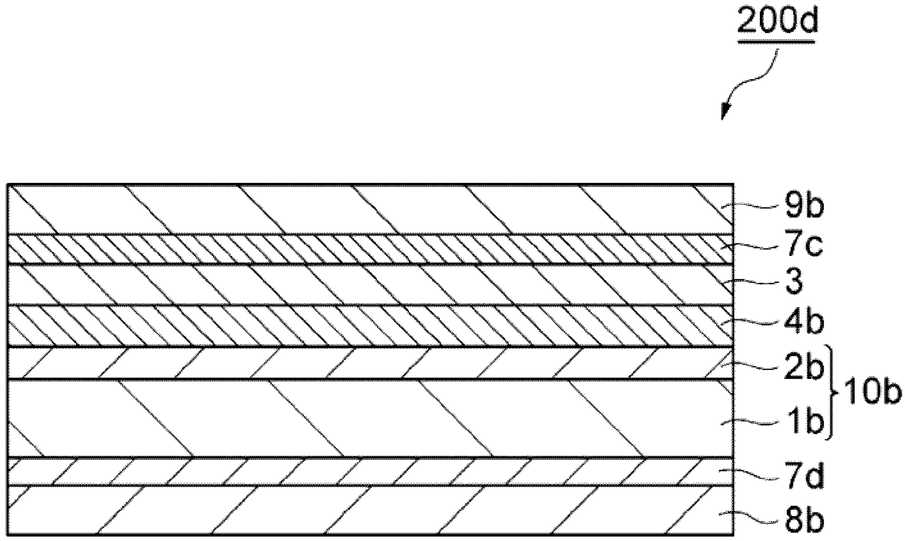

FIG.7

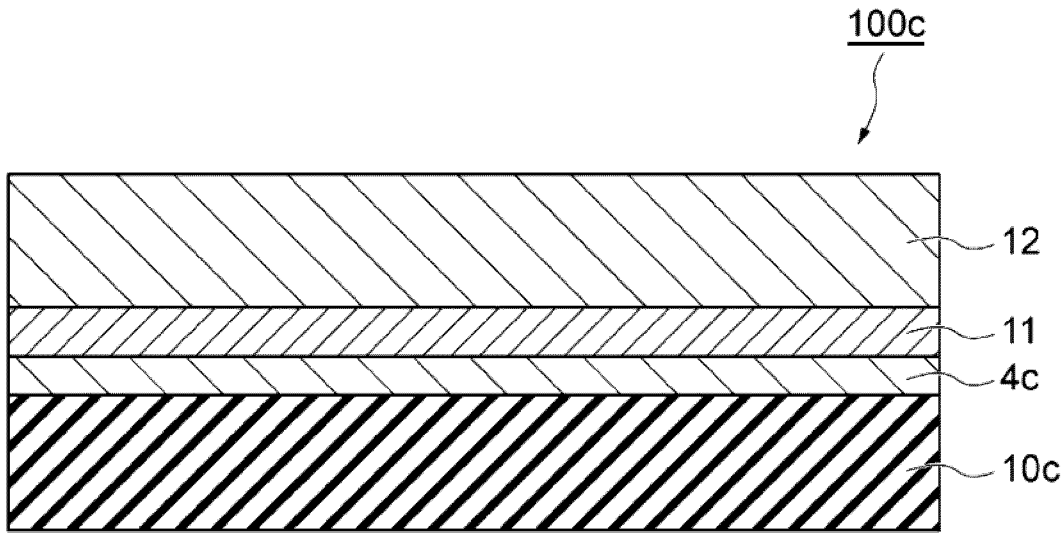

FIG.8

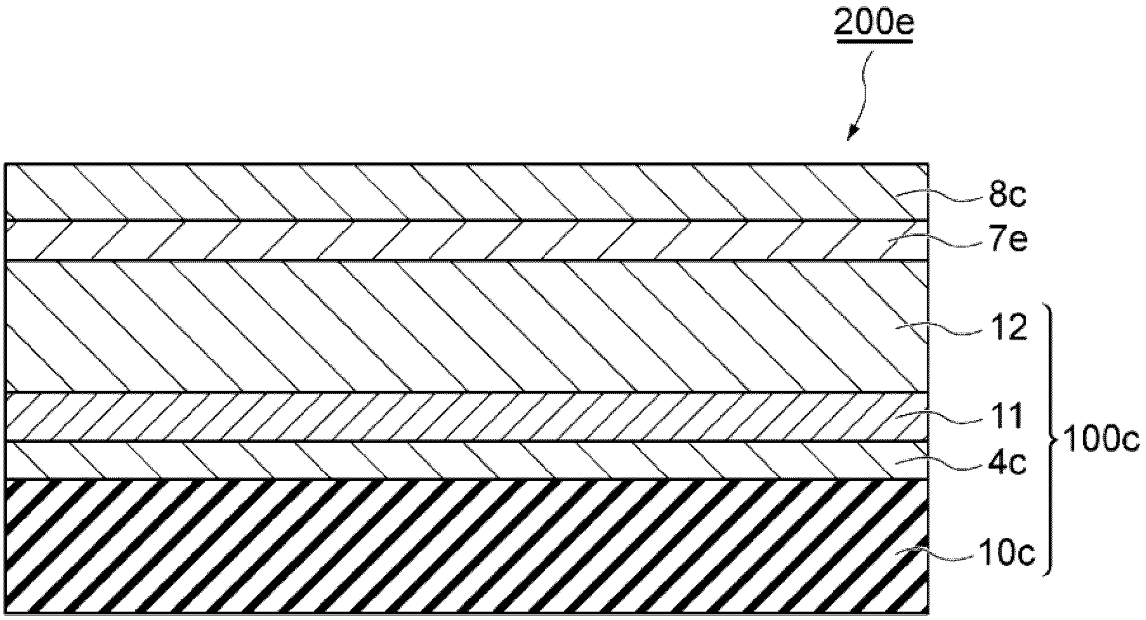

FIG.9

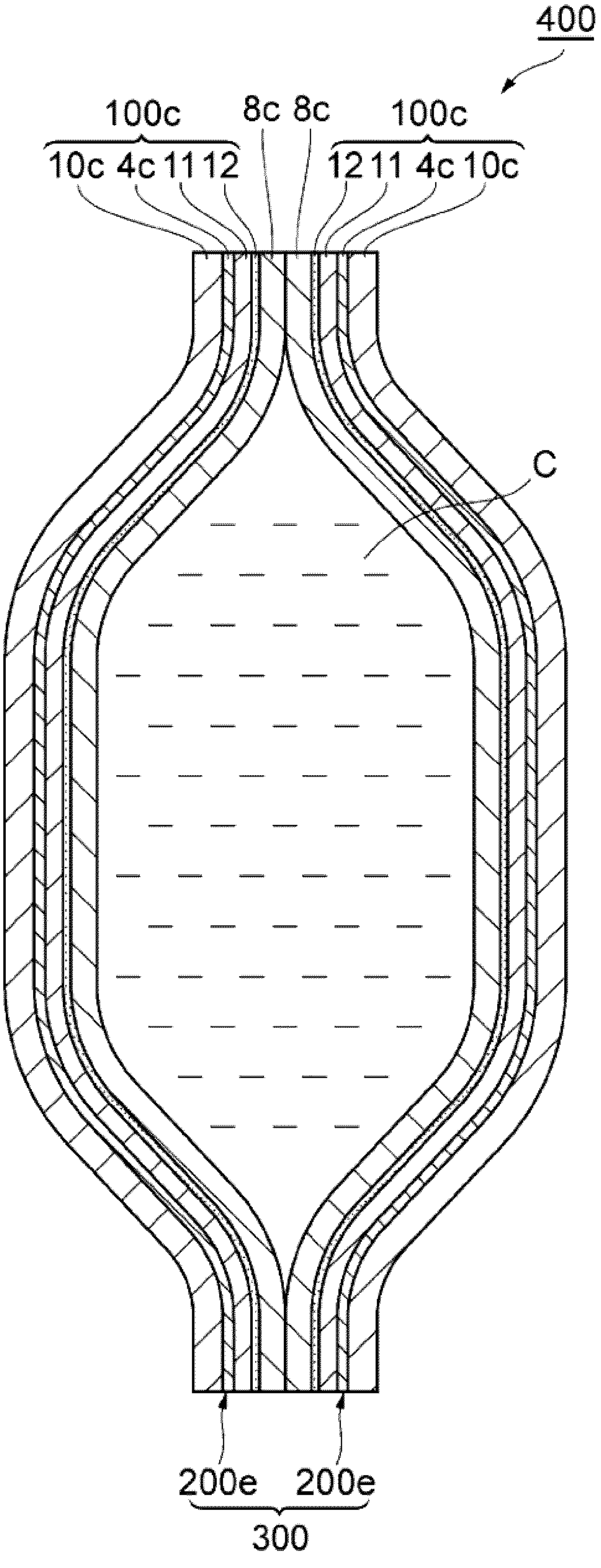

## INTERNATIONAL SEARCH REPORT

International application No.
**PCT/JP2022/044793**

**A. CLASSIFICATION OF SUBJECT MATTER**

***B32B 27/32***(2006.01)i; ***B32B 9/00***(2006.01)i; ***B65D 65/40***(2006.01)i
FI: B32B27/32 E; B32B9/00 A; B65D65/40 D

According to International Patent Classification (IPC) or to both national classification and IPC

**B. FIELDS SEARCHED**

Minimum documentation searched (classification system followed by classification symbols)

B32B1/00-43/00; B65D65/00-65/46

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2021-169193 A (TORAY ADVANCED FILM CO., LTD.) 28 October 2021 (2021-10-28) claims, paragraphs [0032], [0035], [0037], [0041], [0047]-[0048], 0051]-[0052], [0072]-[0074], [0096], [0100]- [0103], tables 1-3, examples | 1, 3-7, 13-18, 20-22 |
| Y | | 19 |
| A | | 2, 8-12 |
| X | JP 2021-30533 A (DAINIPPON PRINTING CO., LTD.) 01 March 2021 (2021-03-01) claims, paragraphs [0115]-[0116], [0124]-[0127], examples | 8, 10-12 |
| A | | 9 |
| Y | JP 2008-207868 A (TOPPAN PRINTING CO., LTD.) 11 September 2008 (2008-09-11) paragraph [0020] | 19 |
| Y | JP 11-158608 A (TOPPAN PRINTING CO., LTD.) 15 June 1999 (1999-06-15) paragraphs [0035]-[0043] | 19 |
| A | JP 2021-169194 A (TORAY ADVANCED FILM CO., LTD.) 28 October 2021 (2021-10-28) entire text | 1-22 |

☑ Further documents are listed in the continuation of Box C.
☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **20 February 2023** | **07 March 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**

International application No.
**PCT/JP2022/044793**

**C. DOCUMENTS CONSIDERED TO BE RELEVANT**

| Category* | Citation of document, with indication, where appropriate, of the relevant passages | Relevant to claim No. |
|---|---|---|
| A | JP 2020-163631 A (DAINIPPON PRINTING CO., LTD.) 08 October 2020 (2020-10-08) entire text, all drawings | 1-22 |
| A | JP 2021-66107 A (DAINIPPON PRINTING CO., LTD.) 30 April 2021 (2021-04-30) entire text, all drawings | 1-22 |
| A | JP 2021-62632 A (DAINIPPON PRINTING CO., LTD.) 22 April 2021 (2021-04-22) entire text, all drawings | 1-22 |
| A | JP 2021-169211 A (IDEMITSU UNITECH CO., LTD.) 28 October 2021 (2021-10-28) entire text, all drawings | 1-22 |

Form PCT/ISA/210 (second sheet) (January 2015)

**INTERNATIONAL SEARCH REPORT**

International application No.
**PCT/JP2022/044793**

**Box No. III Observations where unity of invention is lacking (Continuation of item 3 of first sheet)**

This International Searching Authority found multiple inventions in this international application, as follows:

(Invention 1) Claims 1-7

Claim 1 is classified as invention 1 due to having the special technical feature in which "... the base material layer includes a biomass-derived polyolefin layer containing biomass-derived polyolefin, and ... a fossil fuel-derived polyolefin layer not containing biomass-derived polyolefin, ... wherein the fossil fuel-derived polyolefin layer ... is the outermost layer on the metal oxide layer side ... of the base material layer ...".

Furthermore, claims 2-7 directly or indirectly citing claim 1 are inventively linked to claim 1, and thus are classified as invention 1.

(Invention 2) Claims 8-12

Claim 8 shares, with claim 1 classified as invention 1, the features of: a "base material layer"; "the base material layer includes a biomass-derived polyolefin layer containing biomass-derived polyolefin, and ... a fossil fuel-derived polyolefin layer not containing biomass-derived polyolefin"; and "the degree of biomass of the base material layer is at least 5%". However, these features do not make a contribution over the prior art in the light of the content disclosed in document 1 (table 2, example 11), and thus cannot be said to be special technical features. Furthermore, there is no other identical or corresponding special technical feature between claim 8 and claim 1.

Additionally, claim 8 does not depend from claim 1. Moreover, claim 8 is not substantially identical to or similarly closely related to any of the claims classified as invention 1.

Therefore, claim 8 cannot be classified as invention 1, and thus is classified as invention 2.

Furthermore, claims 9-12 directly or indirectly citing claim 8 are inventively linked to claim 8 and thus are classified as invention 2.

(Invention 3) Claims 13-22

Claim 13 shares, with claim 1 classified as invention 1, the features of a "base material layer" and a "barrier film". However, these features do not make a contribution over the prior art in the light of the content disclosed in document 1 (claims), and thus cannot be said to be special technical features. Furthermore, there is no other identical or corresponding special technical feature between claim 13 and claim 1.

Additionally, claim 13 does not depend from claim 1. Moreover, claim 13 is not substantially identical to or similarly closely related to any of the claims classified as invention 1.

Therefore, claim 13 cannot be classified as either invention 1 or invention 2, and thus is classified as invention 3.

Furthermore, claims 14-22 directly or indirectly citing claim 13 are inventively linked to claim 13, and thus are classified as invention 3.

Form PCT/ISA/210 (continuation of first sheet) (January 2015)

**INTERNATIONAL SEARCH REPORT**

International application No.
**PCT/JP2022/044793**

**Box No. III Observations where unity of invention is lacking (Continuation of item 3 of first sheet)**

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (January 2015)

**INTERNATIONAL SEARCH REPORT**
**Information on patent family members**

International application No.
**PCT/JP2022/044793**

| Patent document cited in search report | Publication date (day/month/year) | Patent family member(s) | Publication date (day/month/year) |
|---|---|---|---|
| JP 2021-169193 A | 28 October 2021 | (Family: none) | |
| JP 2021-30533 A | 01 March 2021 | (Family: none) | |
| JP 2008-207868 A | 11 September 2008 | (Family: none) | |
| JP 11-158608 A | 15 June 1999 | (Family: none) | |
| JP 2021-169194 A | 28 October 2021 | (Family: none) | |
| JP 2020-163631 A | 08 October 2020 | (Family: none) | |
| JP 2021-66107 A | 30 April 2021 | (Family: none) | |
| JP 2021-62632 A | 22 April 2021 | (Family: none) | |
| JP 2021-169211 A | 28 October 2021 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H10264292 A
- JP 2020040259 A